# EUROPÄISCHE PATENTSCHRIFT

(11) **EP 1 752 573 B1**
(45) Veröffentlichungstag und Bekanntmachung des Hinweises auf die Patenterteilung: **10.03.2010**
(21) Anmeldenummer: 06016303.7
(22) Anmeldetag: 04.08.2006
(51) Int. Cl.: D04B 21/20

(54) **Polsterung für einen Fahrgastsitz**
Upholstery for vehicle seat
Rembourrage pour siège de véhicule

(30) Priorität: 08.08.2005 AT 13302005
(43) Veröffentlichungstag der Anmeldung: 14.02.2007
(73) Patentinhaber: Greiner Purtec GmbH, 4550 Kremsmünster (AT)
(72) Erfinder: Mösender, Johann, 4600 Thalheim/Wels (AT)
(74) Vertreter: Secklehner, Günter

(56) Entgegenhaltungen:
- EP-A- 1 559 611
- EP-A2- 0 897 029
- DE-A1- 4 239 068
- DE-A1- 4 317 883
- DE-A1- 10 013 492
- DE-A1- 10 110 329
- DE-A1- 19 530 928
- DE-A1- 19 847 334
- GB-A- 2 009 266
- JP-A- 2000 300 393
- US-A- 5 013 089
- DATABASE WPI Week 199238 Derwent Publications Ltd., London, GB; AN 1992-311554 XP002430060 -& JP 04 215710 A (MITSUBISHI MOTOR CORP) 6. August 1992 (1992-08-06)

## Beschreibung

Die Erfindung bezieht sich auf eine Polsterung für einen Fahrgastsitz mit einem Traggestell, insbesondere einen Flugzeugsitz, umfassend zumindest eine Schicht, die durch eine Textilfläche aus Fäden und/oder diese Fäden bildenden Fasern gebildet ist, wobei die Textilfläche zumindest bereichsweise durch ein Abstandsgestrick aus zumindest zwei voneinander distanzierten Lagen und sich dazwischen erstreckenden Polfäden gebildet ist, und an der von einem Benutzer abgewendeten Seite der Textilfläche zumindest bereichsweise zumindest ein als Schaumstoffelement ausgebildetes Funktionselement angeordnet ist.

Die JP 04-215710 A beschreibt einen Sitzpolster aus einem Tragkörper aus einem Kunststoffmaterial, auf welchem auf der dem Benutzer zugewendeten Seite ein Abstandsgestrick bestehend aus einer oberen und unteren Lage angeordnet ist. Die zwischen den beiden Lagen des Abstandsgestricks angeordneten Polfäden weisen eine ausreichende Festigkeit bzw. Steifigkeit auf, um eine Belüftung zwischen den beiden Lagen des Abstandsgestrickes während der Benutzung zu ermöglichen. Das Abstandsgestrick ist während der Benutzung stets am darunter liegenden Polsterteil abgestützt.

Die DE 43 17 883 A1 beschreibt ein Abstandsgewirke zur Aufpolsterung und als Bezug für Fahrzeugsitze und -innenverkleidungen, wobei das Abstandsgewirke zwei parallele Gewirkelagen aufweist, die über elastische Abstandsfäden miteinander verbunden sind. Zwischen den Gewirkelagen sind längliche zueinander parallele Kammern vorgesehen, in denen die begrenzenden Gewirkelagen verbindungsfrei übereinander liegen. In die offenen Kammern sind jeweils elastische, in der Regel gekrümmt vorgeformte Stäbe eingeschoben, um dem Abstandsgewirke eine Formgebung zu verleihen. Jene Kammern, die nicht mit Stäben bestückt werden, können beispielsweise bei Verwendung als Aufpolsterung eines Sitzes im Bereich der Rückenfläche oder im Bereich der Sitzfläche des Sitzes isolierende Luftkammern ausbilden.

Aus der DE 42 39 068 A1 ist ebenfalls ein Abstandsgewirke zur Aufpolsterung von Fahrzeugsitzen bekannt geworden, das zwei parallele Gewirkelagen hat, die über Abstandsfäden miteinander verbunden sind. In zumindest einer der beiden parallelen Gewirkelagen sind zusätzlich eingewirkte Leiterfäden angeordnet, die miteinander leitend verbunden sind und zumindest einen Anschlusskontakt zur Verbindung mit einer elektrischen Spannungsquelle aufweisen.

Die EP 1 559 611 A2 beschreibt einen fluidbefüllbaren volumsveränderlichen Körper, der aus zwei übereinanderliegenden, miteinander entlang seines umlaufenden Randes verbundenen, vorzugsweise verschweißte Folien aus Kunststoffmaterial besteht. Die Folien bilden überdies einen Scharnierbereich, entlang welches Scharnierbereiches die Folien unter Bildung zweier zumindest teilweise übereinanderliegender Teilbereiche des aufblasbaren Körpers gefaltet sind. Durch die Folien ist zumindest ein den Scharnierbereich durchquerender Verbindungskanal zwischen den beiden Teilbereichen des befüllbaren Körpers ausgebildet. Um den Überström-Widerstand zwischen den Teilbereichen des Körpers möglichst herabzusetzen und den einfachen und weichen Fluidaustausch selbst bei geringem Druckunterschied sicher zu gewährleisten, ist im Verlauf des Verbindungskanals zumindest ein Element vorgesehen, welches die Folien auch im entlüfteten Zustand des Körpers über zumindest einen Teil der Breite des Verbindungskanals beabstandet hält.

Aus der EP 1 226 991 A1 ist ein Fahrzeugsitz bekannt, welcher in Breitenrichtung des Sitzes voneinander um einen Abstand voneinander distanzierte Seitenrahmenhalterungselemente sowie ein dazwischen angeordnetes plattenförmiges Unterstützungsteil mit Seitenteilen aufweist. Weiters ist eine Mehrzahl von Metallfedern für jedes Seitenteil vorgesehen, wobei jede Metallfeder an einem Ende mit dem Seitenteil des plattenförmigen Unterstützungsteils und an seinem anderen Ende mit dem Seitenrahmenhalterungselement verbunden ist, um dadurch das plattenförmige Unterstützungsteil verbindend an den Seitenrahmenhalterungselementen zu haltern. Weiters umfasst der Fahrzeugsitz ein Außenlagenteil, welches ein Sitzkissen ausbildet und über dem verbindend gehaltenen plattenförmigen Unterstützungsteil angeordnet ist, sodass das plattenförmige Unterstützungsteil das Sitzkissen bei Benutzung unterstützt und eine Rückstellkraft gegen eine Verschiebung des Kissens bereitstellt. Das Außenlagenteil ist dabei durch ein Netzteil gebildet, das eine dreidimensionale Struktur in Form eines Abstandsgestrickes aus zumindest zwei voneinander distanzierten Lagen und sich dazwischen erstreckenden Polfäden gebildet ist.

Die EP 1 193 117 B1 beschreibt einen Fahrzeugsitz, bei dem Rahmenteile in Breitenrichtung des Sitzrahmens separat voneinander angeordnet sind. An diesen Rahmenteilen ist ein Basissteil durch Metallfedern gehalten und dient zu Absorption von Vibrationen, die von einem Fahrzeugboden kommen. Weiters umfasst der Fahrzeugsitz noch ein erstes und zweites Netzteil, welche jeweils eine dreidimensionale Struktur mit einer vorderen Maschenlage und einer hinteren Maschenlage aufweist, die durch eine große Anzahl von Polfäden miteinander verbunden sind. Das erste Netzteil ist über dem Basisteil und zwischen den Rahmenteilen zur Ausbildung einer mittleren Schicht angeordnet. Das zweite Netzteil ist am Fahrzeugsitz so angeordnet, dass es die Oberseite der mittleren Lage, also das erste Netzteil, abdeckt und dabei eine oberste Lage ausbildet. Zur Abdeckung der Rahmenteile ist zwischen einem Teil des ersten Netzteils, das die mittlere Lage ausbildet und den Rahmenteil abdeckt und dem zweiten Netzteil, das die obere Schicht ausbildet, ein viskoelastischer Teil eingebracht. Es ist auch möglich, den viskoelastischen Teil zwischen dem ersten Netzteil, das die mittlere Lage ausbildet und den Rahmenteil, um das das erste Netzteil gewunden ist, anzuordnen.

Die EP 1 393 657 A1 beschreibt ebenfalls einen Fahrzeugsitz mit in Breitrichtung des Sitzrahmens voneinander distanziert angeordneten Rahmenteilen, wobei zwischen den Rahmenteilen über Metallfedern ein netzförmiges elastisches Bauteil gehalten ist. Das Polstermaterial für den Fahrzeugsitz umfasst weiters eine elastische Zwischenlage, welche an der Oberseite des netzförmigen elastischen Bauteils gehalten ist. Eine weitere obere elastische Lage ist an der Oberseite der elastischen Zwischenlage angeordnet und zusätzlich noch über die Rahmenteile gespannt. Die elastische Zwischenlage als auch die oberste elastische Lage sind dabei durch ein dreidimensionales Abstandsgestrick gebildet.

Aus der EP 0 936 105 B1 ist ein Polster für ein Sitzteil und/oder Rückenlehne des Fahrzeugsitzes bekannt geworden, welcher eine luftdurchflutbare Ventilationsschicht aufweist. Diese Ventilationsschicht besteht aus einer luft- und wasserdurchlässigen Ober- und Unterschicht und aus diese auf Abstand haltende und miteinander verbindende, elastisch biegbare, voneinander beabstandete Abstandsstege oder Fäden. Weiters sind Lüfter oder Ventilatoren zum Einblasen von Luft in die Ventilationsschicht vorgesehen. Diese Ventilationsschicht kann aus einem Abstandsgewirk bestehen, das in Schussrichtung eine größere Dichte aufweist als in Kettrichtung. Zur besseren Luftleitung können zusätzlich noch in der Ventilationsschicht lamellenartig ausgebildete Luftleitelemente angeordnet sein, die zur Luftablenkung zur Polsteroberfläche hin in Richtung der Oberschicht leitschaufelartig schräg angestellt sind.

Textilflächen für Möbel, wie Sessel, Rückenlehnen, Sitz- und Liegeflächen sind aus der DE 201 18 250 U1 bzw. der AT 004 727 U1 bekannt geworden. Dabei wird die mit Strickmaschinen hergestellte Textilfläche zwischen wenigstens zwei Rahmenteilen aufgespannt. Weiters sind die Textilflächen der Einfachheit halber zur Gänze in der benötigten Form formgestrickt. Weiters weist die Textilfläche Strickränder auf, welche eine engere Maschenweite haben als die dazwischen liegenden Flächen der Textilfläche. Die Strickränder haben die Form eines gestrickten Schlauches, wobei die Schlauchränder über stabförmige Rahmenteile des Möbels überziehbar oder in Haltenuten der Rahmenteile einschiebbar sind. Als Fäden für das gestrickte Textil werden elastische Kunststofffasern, wie Trevira CS 167F 64 X1 verwendet.

Eine andere Polsterung für Möbel ist aus der EP 1 447 030 A1 bzw. der DE 203 02 364 U1 bekannt geworden. Diese Polsterung weist mindestens ein Polfadengestrick auf, bei dem an mindestens einer Kante eine Verstellvorrichtung angeordnet ist. Diese erlaubt es, dass Polfadengestrick einer unterschiedlichen Vorspannung auszusetzen und damit abhängig vom Spannungszustand eine unterschiedliche Härte zu erzielen. Das Polfadengestrick ist dabei selbsttragend, wobei im Randbereich Schlaufen oder ein Schlauch direkt an das Polfadengestrick angestrickt sind. Das Polfadengestrick zeichnet sich durch eine gute Luftdurchlässigkeit aus, sodass kein Wärmestau und auch kein Speichern von Feuchtigkeit in diesem entsteht. Diese Eigenschaften können noch dadurch unterstützt werden, wenn das Polfadengestrick wenigstens bereichsweise aus einem hydrophoben und/oder hydrophilen Material gefertigt ist. Bei Polfadengestricken kommt es außerdem durch die Körperbewegung zu einer Bewegung der Luft zwischen den beiden Decklagen, sodass eine zusätzliche mechanische Belüftung der Polsterung unter Umständen ganz entfallen kann. Weiters kann das Polfadengestrick wenigstens bereichsweise aus einem antistatischen oder einem elektromagnetische Strahlung abschirmenden Material gefertigt sein. Darüber hinaus sind aber auch UVbeständige und schnell trocknende Materialien einsetzbar.

Ein weiteres Abstandsgestrick ist aus der GB 2 009 266 A bekannt geworden, bei der das Abstandsgestrick als Auflage für Möbel oder Sitze verwendet wird. Dieses als Auflage verwendete Abstandsgestrick, kann zusätzlich noch von einem Überzug abgedeckt werden, wodurch unterhalb diesem eine gute Belüftung erfolgen kann. Die Fäden für die Decklagen werden aus Nylon-Monofilamenten und der Polfaden aus Polypropylen gebildet. Weiters können die Fäden unterschiedliche Querschnitte aufweisen und auch aus Folienstreifen gebildet sein. Das Abstandsgestrick ist einfach waschbar, bzw. nicht entflammbar ausgebildet.

Ein Abstandstextilmaterial variabler Dicke, sowie ein Herstellungsverfahren dazu, ist aus der EP 0 617 152 B1 bekannt geworden. Dieses Abstandstextilmaterial wird auf einer Strickmaschine hergestellt und weist eine obere und eine untere Deckschicht, bestehend aus gestricktem Material auf. Die Deckschichten sind durch mindestens eine Polfadenstruktur miteinander verbunden, wobei die Deckschichten und die Polfadenstruktur aus Strickware oder aus Strick- und Webanteile aufweisenden Material bestehen. Weiters weist das Abstandstextilmaterial eine dreidimensionale Form auf, die durch Variation der Polfadenlänge, der Polfadendichte und/oder des Polfadenmaterials, sowie auf der Zunahme und Abnahme von Maschen passiert. Die Dicke des Abstandsmaterial wird durch die Veränderung der Polfadenlänge variiert. An den Deckschichten sind flächige Strukturen, wie Musterungen, Strukturvariationen und/oder Farbvariationen ausgebildet. Das Material eines Polfadens ist derart gewählt, dass dieses auf chemische oder physikalische Einflüsse reversibel, teilreversibel oder irrreversibel reagiert. Als Ausgangsmaterialien eignen sich alle, auf den Strickmaschinen verarbeitbaren Fadenmaterialien, wie Mono-, Multifilamente sowie Mehrkomponentenfilamente. Als Basismaterial eignen sich darüber hinaus natürliche und synthetische Fasern, aber auch Drähte oder mineralisches Material, wie Glas- oder Steinfasern. Das Fadenmaterial kann weiters noch umsponnen, ummantelt, umwunden und/oder oberflächlich beschichtet sein. Wird der Polfaden aus einem relativ steifen Material, z.B. einem Monofilament, ausgeführt und die Deckschichten aus einem Material das sich bei erhöhter Temperatur verkürzt, so kann durch Erhitzen eine Kontraktion der Deckschichten erzielt werden, wobei aber das Polfadenmaterial im Wesentlichen unverändert bleibt.

Ein bekannter Sitz mit einem Polster aus Schaumkunststoff - gemäß WO 87/06894 A1 der gleichen Anmelderin - besteht aus einem Schaumkunststoff mit einem Stützkörper aus einem offenzelligen, elastischen Kunststoffschaum mit einem ersten Raumgewicht und einer Flammschutzschicht aus einem offenzelligen, mit Flammschutzmittel versehenem, elastischen Schaumkunststoff mit einem zweiten zum ersten unterschiedlichen Raumgewicht. Der Kunststoffschaum und die Flammschutzschicht sind miteinander, insbesondere durch einen Schäumvorgang, verbunden und mit einem schwer entflammbaren Bezugsstoff umgeben. Um eine ausreichende Luftdurchlässigkeit eines derartigen Polsters zu erzielen, wurde auch vorgeschlagen, nach Fertigstellung des Polsters Nadeln hindurchzustoßen, sodass ein entsprechender Luftaustausch möglich ist. Diese Polster haben sich in der Praxis an sich sehr gut bewährt, es hat sich jedoch gezeigt, dass vor allem bei extremen Witterungsbedingungen oder unter verschiedenen klimatischen Verhältnissen der Sitzkomfort der Sitze für den geplanten Einsatzzweck in Fahrzeugen nicht ausreichend war.

Weiters sind bereits Sitze für öffentliche Verkehrsmittel bekannt - gemäß DE 85 06 816 U - die einen Sitzpolster aufweisen, der mit einem Sitzbezug abgedeckt ist, wobei der Sitzbezug und der Sitzpolster aus einem schwer entflammbaren und raucharmen Material besteht. Vielfach wird dabei so vorgegangen, dass zwischen dem schwer entflammbaren Sitzbezug und dem meist aus Kunststoffschaum bestehenden Sitzpolster eine Glasfasermatte angeordnet wird, die ein Durchbrennen des Sitzbezuges in Richtung des Sitzpolsters verhindern soll. Dabei hat sich jedoch gezeigt, dass in vielen Fällen die Flammeinwirkung vom Boden her entsteht und der Kunststoffschaum des Sitzpolsters dazu neigt, unter starker Rauchentwicklung zu verbrennen, wodurch die öffentlichen Verkehrsmittel im Brandfall in kürzester Zeit so verqualmt sind, dass eine Orientierung für Insassen kaum mehr möglich ist. Dementsprechend ist bei diesem bekannten Sitz vorgesehen, dass unterhalb des Sitzpolsters in dem Traggestell des Sitzes eine feuerhemmende Platte angeordnet wird. Dies bedingt die Verwendung eines speziellen Profils zur Halterung des Sitzpolsters sowie einen zusätzlichen Aufwand durch die Anordnung der feuerhemmenden Platte. Auch bei dieser Ausführungsform konnte die Sitzbelüftung nicht befriedigen.

Sitze mit Polster aus Schaumkunststoff sind im modernen Fahrzeugbau sehr weit verbreitet. Vor allem werden sie in Schienen- und Straßenfahrzeugen aber in überwiegendem Maß auch in Flugzeugen eingesetzt. Während bereits die für Schienenfahrzeuge geltenden Vorschriften hinsichtlich der selbstverlöschenden Ausbildung der verwendeten Materialien bzw. der Rauchentwicklung sehr strenge Richtlinien vorschreiben, so werden diese von den in der Flugzeugindustrie geltenden Vorschriften aber noch übertroffen. So ist bei für den Einsatz in Flugzeugen zugelassenen Sitzen eine Prüfung vorgeschrieben, bei der die Polster in ihrer zum Einbau vorgesehenen Ausstattung einer Flamme aus einem Brenner direkt ausgesetzt werden. Diese Flamme wirkt über eine Zeitdauer von 2 Minuten direkt auf den Polster ein, wonach die Flamme abgelöscht bzw. entfernt wird. Der Polster wird, falls bis dahin die Flammen nicht selbst erloschen sind, nach 5 Minuten gelöscht. Nach diesem Brandtest darf der Gewichtsverlust des Polsters nicht höher als 10 % sein. Um diese äußerst strengen Vorschriften zu erfüllen, gleichzeitig auch einen hohen Sitzkomfort in den Sitzen bei den lang andauernden Flugreisen und ein geringes Gewicht zu erzielen, wurden Sitzpolster aus verschiedenen, mit Flammschutzmitteln versehenen, offenzelligen, elastischen Weichschaumkunststoffen mit unterschiedlichen Raumgewichten zusammengeklebt. Ein derartiger bekannter Fahrzeugsitz - gemäß EP 0 190 064 A1 - besteht aus mehreren Lagen Nadelvlies, die von einem flammfesten Bezugsstoff umhüllt sind. Zwischen dem Bezugsstoff und den einzelnen Lagen aus Nadelvlies sind zur Verringerung von Schäden durch Vandalen Verstärkungsmatten aus Metall bzw. Glasfasern angeordnet. Durch das Verkleben der einzelnen Schichten und die vielfachen Zwischenlagen dieser Vandalenschutzschicht ist bei dem bekannten Fahrzeugsitz eine ausreichende Durchlüftung noch kaum erzielbar.

Bei einem anderen bekannten Sitz für Flugzeuge ist, um die komplizierte räumliche Formgebung der Sitzpolster einfacher zu realisieren, der einteilige Stützkörper aus einem mit Flammschutzmitteln versetzten, in einer Form einstückig geschäumten Teil gebildet, dessen Oberfläche mit einer Flammschutzschicht und danach mit einem flammfesten Bezugsstoff überzogen wird. Mit den bekannten Sitzen konnten jedoch die neuen verschärften Sicherheitsbestimmungen und Prüfungsvorschriften für Flugzeugsitze sowie der Forderung nach kostengünstigen Reinigungs- und Wartungszeiten nicht erfüllt werden.

Weitere Sitzpolster, insbesondere für Flugzeugsitze, sind aus der DE 42 09 468 A1 sowie der DE 44 38 018 A1 bekannt geworden, bei welchen der Stützkörper des Sitzpolsters aus zumindest zwei zueinander unterschiedlichen Bauteilen gebildet ist, welche miteinander, insbesondere lösbar, verbunden sind. Dabei bildet ein Bauteil ein Tragelement sowie ein weiteres Bauteil ein Aufsatzelement. Das Tragelement kann seinerseits wiederum aus mehreren Teilen gebildet sein, wobei zumindest über einen Teilbereich der Dicke des Tragelementes und/oder des Aufsatzelementes zwischen einer vorderen und/oder einer hinteren Stirnkante des Trag- und/oder Aufsatzelementes und etwa einem Mittelbereich derselben ein zusätzlicher Einsatzteil angeordnet ist. Dieser weist gegenüber dem Trag- und/oder Aufsatzelement eine höhere Härte auf, wobei das Raumgewicht des Einsatzteils geringer ist als das Raumgewicht des Tragelements. Weiters ist es möglich, im Tragteil des Tragelementes eine zusätzliche Stützvorrichtung, wie insbesondere einen Federkern, anzuordnen.

Der vorliegenden Erfindung liegt die Aufgabe zugrunde, eine Polsterung für einen Fahrgastsitz zu schaffen, welche den außergewöhnlichen Belastungen in Verkehrsmitteln, wie vor allem bei Flugzeugsitzen, gerecht wird und bei denen ein guter Sitzkomfort für den Benutzer auch über längere Benutzungszeiten erzielbar ist.

Diese Aufgabe der Erfindung wird dadurch gelöst, dass die Textilfläche mit einer parallel zu dieser ausgerichteten Vorspannkraft zumindest bereichsweise mit einem Tragrahmen des Traggestells verbunden ist und dass das Schaumstoffelement von der Textilfläche in senkrechter Richtung dazu distanziert angeordnet ist.

Der sich durch die Merkmale des Kennzeichenteiles des Anspruches 1 ergebende überraschende Vorteil liegt darin, dass dadurch eine stufenweise Abstützung des, auf die Polsterung einwirkenden Gewichtes erfolgen kann. Eine erste Abstützung kann so durch die Textilfläche übernommen werden und in weitere Folge erfolgt die Abstützung durch das von der Textilfläche distanziert angeordnete und als Funktionselement ausgebildete Schaumstoffelement. Dadurch kann in vielen Fällen eine gute Durchlüftung erzielt werden und darüber hinaus auch noch höhere Lasten von der gesamten Polsterung abgetragen werden, ohne dass dabei der Sitzkomfort nachteilig beeinflusst wird. Durch das distanziert angeordnete Schaumstoffelement wird der Sitzkomfort verbessert. Dabei kann je nach Anordnung des Schaumstoffelements die Polsterung einfach an unterschiedlichste Anforderungen angepasst werden. Weiters lassen sich auch noch die Härte sowie der von der Polsterung auf den Benutzer ausgeübte Gegendruck flächenmäßig besser aufteilen. Durch die Verwendung des Abstandsgestricks wird eine einfache Herstellung sowie Montage am Tragrahmen ermöglicht. Darüber hinaus wird durch die Textilfläche bereits ein Kräfte aufnehmendes bzw. abtragendes Bauteil der Polsterung geschafften, welches bei geringstem Gewicht eine ausreichende Festigkeit, sowie eine gute Durchlüftung und somit einen guten Abtransport von eingebrachter Wärme durch einen Benutzer der Polsterung ermöglicht.

Vorteilhaft ist auch eine weitere Ausführungsform nach Anspruch 2, da dadurch in seiner Raumform sowie Abmessung ein vollständig nachbearbeitungsfreies Abstandsgestrick geschaffen wird, in welches bereits das Funktionselement integriert ist bzw. nachträglich noch damit versehen werden kann. Durch die automatisierte Herstellung der formgestrickten Textilfläche, ist dieses darüber hinaus kostengünstig herzustellen.

Vorteilhaft ist weiters eine Ausbildung nach Anspruch 3, da dadurch eine noch individuellere Gestaltung der Textilfläche möglich ist und so noch bessere Kombinationsmöglichkeiten für die Gestaltung des Sitzkomforts und der erzielbaren Tragfähigkeit bzw. Festigkeiten möglich ist.

Durch die Ausbildung nach Anspruch 4 ist es möglich, die Tragfestigkeit und damit verbunden die abzutragenden Kräfte der Textilfläche noch zu erhöhen. Dies ist gerade für möglich eintretende Notfälle von Bedeutung, da beispielsweise bei Notlandungen auch höher einwirkende Kräfte von der Textilfläche an den Tragrahmen abgetragen werden können, ohne dass dabei eine gänzliche Zerstörung der Textilfläche und eine mögliche einhergehende Verletzung eines Benutzers erfolgt.

Nach einer anderen Ausführungsvariante gemäß Anspruch 5 wird eine individuelle Anpassung der Polsterung an die Bedürfnisse des Benutzers für verschiedene Einsatzzwecke der Polsterung möglich. Darüber hinaus kann dadurch auch noch ein gesteuerter Luftaustausch innerhalb der Fäden der Textilfläche erzielt werden.

Vorteilhaft ist auch eine Weiterbildung nach Anspruch 6, da dadurch eine einfache Anbindung des Abstandsgestricks an den oder die Tragrahmen erfolgen kann und dadurch höhere Festigkeiten und geringere Dehnungen der Textilfläche in deren Randbereich hin zum Tragrahmen erreicht werden.

Bei der Ausgestaltung nach Anspruch 7 ist von Vorteil, dass dadurch eine einfache Montagmöglichkeit durch vorbestimmbare Öffnungen im Bereich des Strickrandes für das Hindurchtreten von entsprechend ausgebildeten, am Tragrahmen angeordneten Halteelementen, wie beispielsweise Zapfen oder Haken ermöglicht wird. Dadurch kann ohne zusätzliche Hilfsmittel die Textilfläche einfach am Tragrahmen angeordnet und wiederum entfernt werden, wie dies beispielsweise für die Reinigung oder einen Austausch notwendig ist.

Durch die Weiterbildung nach Anspruch 8 wird erreicht, dass über die gesamte Längserstreckung der Textilfläche eine Halterung am Tragrahmen erfolgt. Mit dieser schlauchförmigen Ausbildung des Strickrandes kann dieser entweder über den Tragrahmen geschoben oder in Form einer Keder-Verbindung innerhalb des Tragrahmens durch Einschieben eines stab- oder rohrformigen Bauteils in den Schlauch befestigt werden.

Vorteilhaft sind auch Weiterbildungen nach den Ansprüchen 9 bis 11, da dadurch das Abstandsgestrick der Textilfläche zumindest Bereichsweise für unterschiedlichste Einsatzbedingungen ausgerüstet werden kann. Je nach verwendeter Beschichtung bzw. Imprägnierung können zusätzlich zur Wahl des Werkstoffes für die Fäden oder Fasern zur Bildung des Abstandsgestricks die Eigenschaften beeinflusst bzw. verändert werden.

Durch die Ausbildung nach Anspruch 12 kann den strengen Vorschriften im Bereich der öffentlichen Verkehrsmittel Rechnung getragen werden und so beispielsweise bei Verwendung von ansonst brennbaren Fäden oder Fasern, diese bei einer Flammbelastung trotzdem flammhemmend auszubilden. Dadurch können Werkstoffe Anwendung finden, welche den Sitzkomfort und das Sitzklima verbessern und in weiterer Folge den strengen Vorschriften entsprechen.

Durch die Wahl unterschiedlichster Werkstoffe gemäß den Ansprüchen 13 bis 15 für die Fäden oder Fasern zur Bildung der Textilfläche, kann wiederum auf unterschiedlichte Einsatzbedingungen Bedacht genommen werden, wobei zusätzlich eine einfache Kombination der unterschiedlichen Werkstoffeigenschaften bei entsprechender Wahl der Fäden oder Fasern ermöglicht wird.

Bei der Verwendung von Elastomerfasern gemäß Anspruch 16 oder 17 wird nicht nur die Elastizität der Fäden verbessert sondern auch die Elastizität für das unter Verwendung dieser Fäden hergestellte Gestrick, wodurch sich dieses je nach Beanspruchung leicht verformt und wieder in die ursprüngliche Form zurückbildet.

Fasern oder Fäden mit geringerer Elastizität sind aus Spinnfasern gemäß Anspruch 18 ausgewählt, wodurch sehr gute flammhemmende Eigenschaften des Gestricks erzielt und diese Gestrick auch für die Verwendung in hitzeexponierten Anwendungen verwendet werden kann, wobei dennoch eine hohe Sicherheit und ausreichender Komfort für den Benutzer gewährleistet ist. Vorteilhaft erweist sich auch, dass die Zündtemperatur der soeben genannten Materialien sehr hoch ist. Zudem ist bei den genannten Materialien eine permanente Flammhemmung gegeben und sie sind nicht nachglimmend.

Dabei erweist sich eine Ausgestaltung nach Anspruch 19 vorteilhaft, da durch die Verwendung von Carbonfasem neben der höheren Festigkeit auch bedeutend höhere Steifigkeiten des Gestricks erzielt werden können, wobei das spezifische Gewicht niedrig gehalten werden kann. Die Carbonfasem eignen sich daher besonders für eine leichte aber auch etwas steifere Konstruktion des Gestricks. Zudem erweist sich als vorteilhaft, dass die Dauerfestigkeit bei dynamischer Belastung hervorragend ist und die Wärmeausdehnung sehr gering ist. Gestricke aus Carbonfasem bzw. einem Anteil daraus sind auch noch elektrisch leitfähig.

Durch die Kombination der unterschiedlichen Faserwerkstoffe gemäß Anspruch 20 können die Eigenschaften der einzelnen Fasern miteinander in vorteilhafter Weise verbunden werden. Die feuerhemmende Eigenschaft des Aramid- und/oder Paraarmamidgewebes wird mit den Eigenschaften von Carbon- bzw. Metallfasern, welche eine hohe Festigkeit bei einem geringen spezifischen Gewicht aufweisen mit den Eigenschaften der Elastomerfasern, nämlich der Fähigkeit zur Ausdehnung und Rückstellung in die ursprüngliche Ausgangsposition, vorteilhafterweise miteinander kombiniert.

Vorteilhaft ist auch eine weitere Ausführungsform nach Anspruch 21, da dadurch ohne jegliche Nacharbeiten die Textilfläche zumindest bereichsweise einer Flammbelastung widersteht und nur geringe Teile einem Abbrand ausgesetzt sind. Dadurch wird die Rauchentwicklung ebenfalls minimiert.

Vorteilhaft ist weiters eine Ausbildung nach Anspruch 22, da dadurch auf die Anordnung zusätzlicher Leitungen für die Weiterleitung von Signalen verzichtet werden kann. Darüber hinaus kann dadurch eine Beheizung der Polsterung, zumindest in Teilbereichen derselben erfolgen.

Vorteilhaft sind auch Weiterbildungen nach Anspruch 23 oder 24, da dadurch das Schaumstoffelement zusätzlich noch im Bereich von dessen Unterseite geschützt werden kann und so beispielsweise eine Flammbelastung bzw. ein Eintritt von Schmutz reduziert bzw. verhindert werden kann. Darüber hinaus ist eine einfache Lagefixierung des Schaumstoffelements relativ zur Polsterung möglich.

Schaumstoffelements relativ zur Polsterung möglich.

Durch die Ausbildung nach Anspruch 25 kann eine weitere individuelle Anpassung der Polsterung an die unterschiedlichsten Einsatzbedingungen erfolgen. Dies kann zur Verbesserung des Sitzkomforts, sowie zum Schutz der Textilfläche ausgehend von der Benutzungsseite erfolgen.

Von Vorteil ist aber auch ein Ausbildung nach Anspruch 26, da dadurch der zwischen den Lagen gebildete Zwischenraum des Abstandsgestricks nicht zur Abtragung von Lasten durch die Polfäden dient, sondern dadurch es noch ermöglicht wird, den Sitzkomfort zu verbessern.

Durch die Ausgestaltung nach Anspruch 27 kann das Abstützverhalten rasch und individuell an den jeweiligen Benutzer der Polsterung angepasst werden.

Die Ausgestaltung nach Anspruch 28 ermöglicht universelle Anpassungsmöglichkeiten der Polsterung auf die unterschiedlichsten Einsatzbedingungen. Dabei können je nach Einsatzzweck die von der Polsterung geforderten Eigenschaften einfach erfüllt werden und durch die unterschiedlichsten Kombinationsmöglichkeiten der verschiedenen Schaumstoffe das Sitzverhalten günstig beeinflusst werden.

Durch die Weiterbildung nach Anspruch 29 oder 30 wird erreicht, dass aufgrund der günstigen Kombination von Raumgewicht zu Härte des Kunststoffschaums ein optimales Verhältnis zwischen dem Gesamtgewicht des Bauteils und der zur Verfügung stehenden Masse, welche bei einem eventuellen Brandfall zum Abbrand zur Verfügung steht eingehalten wird. Zusätzlich wird noch bei Einhaltung der notwendigen Stauchhärte trotzdem ein guter Sitzkomfort für einen Benutzer erzielt, wodurch auch ein angenehmes Sitzklima bei lang andauernden Sitzbelastungen erhalten bleibt.

Von Vorteil ist aber auch eine Ausbildung nach Anspruch 31 oder 32, da dadurch eine aufwendig sowie komfortmäßig besser ausgebildete Polsterung geschaffen werden kann, bei welcher auch noch sowohl der Sitzkomfort als auch die nötigen Abstütz- bzw. Sicherheitswerte während eines auftretenden Notfalls eingehalten werden können. Dadurch wird auch eine optimale Abstützung der gesamten Polsterung an unterhalb derselben angeordneten Abstütz- bzw. Tragelementen erzielt, wobei zusätzlich noch ein Durchdringen von Tragteilen in Richtung des Benutzers vermieden bzw. verhindert wird.

Bei der Ausgestaltung nach Anspruch 33 oder 34 ist von Vorteil, dass bedingt durch die Wahl des Kunststoffschaums ein angenehmer Sitzkomfort für den Benutzer erzielt wird, wobei im Zusammenwirken mit der gewählten Dichte bzw. dem Raumgewicht und der damit erzielbaren Härte ein vollständiges Zusammensinken des Schaumgerüstes verhindert wird.

Durch die Weiterbildung nach Anspruch 35 wird erreicht, dass bei länger andauernden ruhenden Belastungen eine flexible Schaumschicht zur Sitzkomfortverbesserung vorliegt, welche jedoch bei schlagartig auftretenden Belastungen ein hohes Absorptionsvermögen gegen auftretende Kräfte aufweist, wodurch eine gute Dämpfungswirkung für die Polsterung erzielt wird.

Gemäß den Ausbildungen wie in den Ansprüchen 36 bis 38 beschrieben, wird ein Zusammensinken des Schaumgerüstes während einer länger andauernden Benutzung verhindert, wodurch ein Zusammenkleben bzw. ein Anhaften einzelner Zellstege des Schaumgerüstes einander verhindert wird. Zusätzlich wird dadurch noch ein günstigeres Sitzklima für den Benutzer erzielt.

Bei der Ausbildung gemäß Anspruch 39 wird durch den Einsatz von Flammschutzmitteln zusätzlich noch das Abbrandverhalten des Kunststoffschaums günstig beeinflusst.

Schließlich sind auch eine weitere Ausführungsformen nach den Ansprüchen 40 oder 41 vorteilhaft, da dadurch einerseits die Selbstverlöschungszeit des Kunststoffschaums eingestellt und somit die Abbranddauer gesteuert werden kann und andererseits auch die strengen Grenzwerte für den Einsatzbereich eingehalten bzw. daran angepasst werden können. Eine geringe Rauchentwicklung bzw. eine helle Rauchentwicklung während des Abbrandes wird speziell durch den Zusatz von Melamin bzw. Melaminharz erzielt. Dadurch ist eine starke Verqualmung des Fahrzeuginnenraums, insbesondere der Flugzeugkabine, unterbunden, wodurch in einem Notfall die Notausgänge besser und sicherer zu erkennen sind.

Die Erfindung wird im nachfolgenden anhand der in den Zeichnungen dargestellen Ausführungsbeispiele näher erläutert.

Es zeigen:
- Fig. 1: einen Fahrgastsitz mit einer schematisch vereinfacht dargestellten Polsterung;
- Fig. 2: eine Polsterung in Ansicht geschnitten, gemäß den Linien II - II in Fig. 1;
- Fig. 3: eine weitere Polsterung in Ansicht geschnitten, gemäß den Linien II - II in Fig. 1.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw, auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

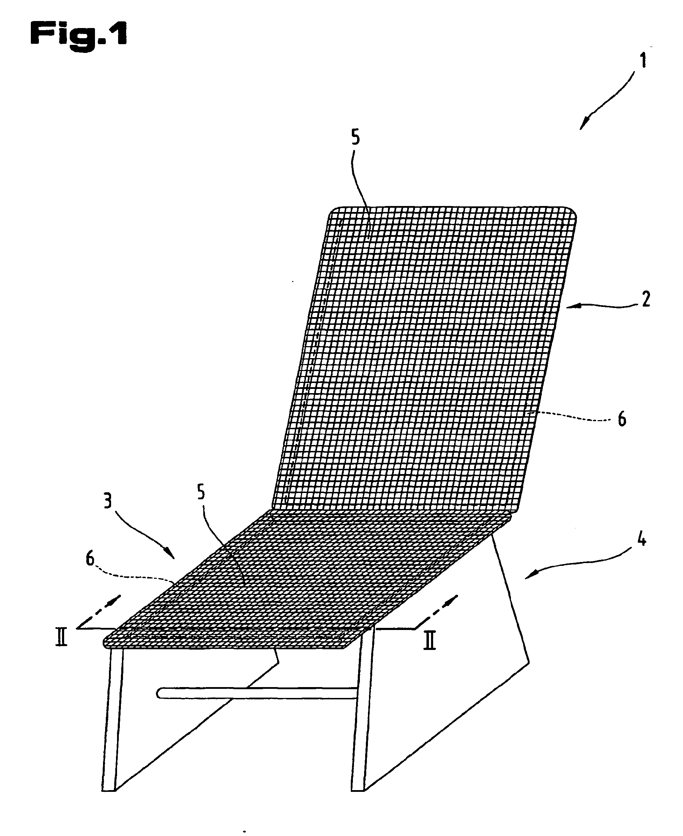

In der Fig. 1 ist vereinfacht ein Fahrgastsitz 1 umfassend eine Rückenlehne 2, einen Sitzteil 3 sowie ein Traggestell 4 gezeigt. Die Rückenlehne 2 sowie die der Sitzteil 3 umfassen weiters eine Polsterung 5, welche jeweils an einem vereinfacht dargestellten Tragrahmen 6 gehaltert ist. Bei dem hier dargestellten Fahrgastsitz 1 kann es sich beispielsweise um einen Flugzeugsitz, einen Sitz in öffentlichen Verkehrsmitteln, wie beispielsweise der Eisenbahn oder Autobus, U-Bahn bzw. aber auch um einen Sitz in einem Automobil handeln. Dabei sei erwähnt, dass der hier dargestellte Fahrgastsitz nur vereinfacht schematisch dargestellt ist, wobei der Aufbau der Polsterung 5 in den nachfolgenden Fig. noch detailliert beschrieben werden wird.

Der oder die Tragrahmen 6 selbst können auf unterschiedlichste bekannte Weise mit dem Traggestell 4 verbunden sein, wobei der besseren Übersichtlichkeit halber auf eine detaillierte Darstellung verzichtet worden ist. Das Traggestell 4 sowie der oder die Tragrahmen 6 können je nach Anwendungsfall auch jede beliebige andere Formgebung aufweisen. Des Weiteren wäre es aber auch noch möglich, für die Abstützung des Unterschenkel- bzw. Fußbereiches dafür notwendige Elemente vorzusehen, welche hier ebenfalls nicht näher dargestellt worden sind. Auch diese Elemente können mit der Polsterung 5 versehen sein. Zur gegenseitigen Lageverstellung der Rückenlehne 2 bzw. des Sitzteiles 3 können ebenfalls verschiedenste aus dem Stand der Technik bekannte Elemente Anwendung finden, mit denen beispielsweise die Neigung der Rückenlehne 2 im Bezug zum Sitzteil 3 relativ verlagerbar ausgebildet ist. Es können aber auch Armlehnen oder Armstützen vorgesehen sein, welche hier ebenfalls nicht näher dargestellt worden sind.

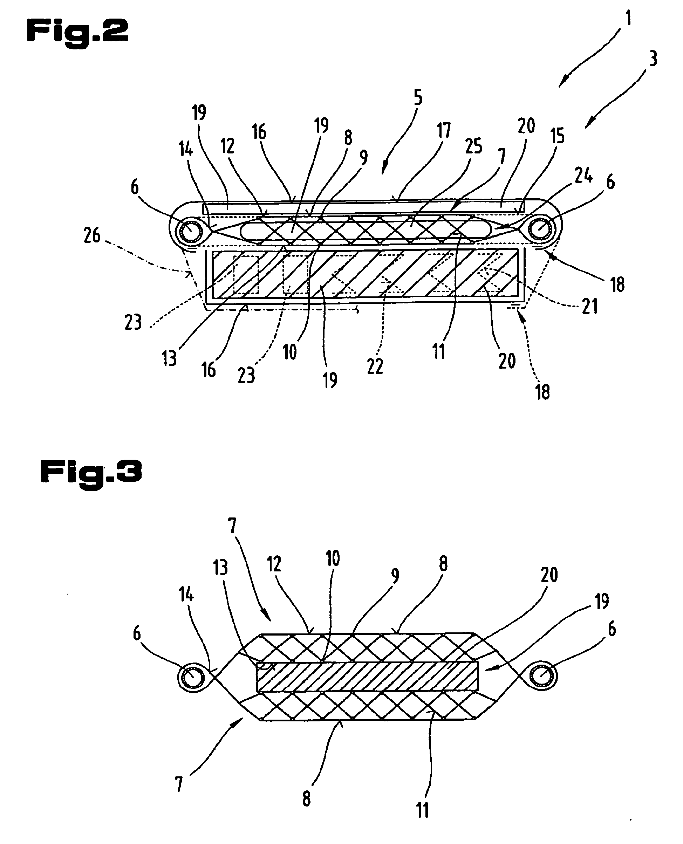

In der Fig. 2 ist die Polsterung 5 für den Sitzteil 3 vereinfacht im Schnitt dargestellt, wobei erwähnt sei, dass die nachfolgend beschriebenen unterschiedlichen Ausführungsformen der Polsterung 5 auch für die Rückenlehne 2 bzw. auch die Abstützung des Unterschenkel- bzw. Fußbereiches Anwendung finden können.

In der einfachsten Ausführung umfasst die Polsterung 5 zumindest eine Schicht 7 aus einer Textilfläche 8, welche aus vereinzelt dargestellten Fäden 9 bis 11 als so genanntes Abstandsgestrick bzw. Polfadengestrick gebildet ist. Dieses Abstands- bzw. Polfadengestrick ist seinerseits aus zumindest zwei voneinander distanzierte Lagen 12, 13 sowie sich dazwischen erstreckende Polfäden gebildet. Dabei können die Polfäden durch einen der zuvor beschriebenen Fäden 9 bis 11 gebildet sein.

Bei diesem hier gezeigten Ausführungsbeispiel ist die Lage 12 der Textilfläche 8 einem hier nicht näher dargestellten Benutzer des Fahrgastsitzes 1 zugewandt und kann auch als Obergurt bezeichnet werden. Die weitere davon abgewendete Lage 13 wird auch als Untergurt bezeichnet. Derartige Abstands- bzw. Polfadengestricke können beispielsweise auf Wirkmaschinen, Doppelgreiferwebmaschinen sowie Strickmaschinen hergestellt werden. Je nach gewählter Fertigungsart distanzieren die Polfäden - beispielsweise der Faden 11 - die beiden Lagen 12, 13 in senkrechter Richtung zueinander. Dadurch können flächige, 2 ½ und/oder 3-dimensionale Strukturen der Textilfläche 8 hergestellt werden. Auf eine nähere detaillierte Beschreibung zur Herstellung derartiger Abstands- bzw. Polfadengestricke wird verzichtet, da dies bereits aus dem allgemeinen Stand der Technik bekannt ist.

Diese hier dargestellte Textilfläche 8 bildet zumindest eine Schicht 7 der Polsterung 5 aus, wobei die Textilfläche 8 zumindest bereichsweise mit dem Tragrahmen 6 verbunden ist. Zur einfacheren Montage und Anbringung der Textilfläche 8 am Tragrahmen 6 weist diese an deren äußeren Umfang zumindest bereichsweise Strickränder 14 auf. So kann - wie dies hier vereinfacht dargestellt ist - der Strickrand 14 zur Aufnahme des hier beispielsweise als Rohr ausgebildeten Tragrahmens 6 ausgebildet sein. Im Zuge der Montage der Textilfläche 8 kann dann diese mit ihren schlauchförmig ausgebildeten Strickrändern 14 über den oder die Tragrahmen 6 geschoben und so einfach die Polsterung 5 hergestellt werden.

Es wäre aber auch möglich, im Tragrahmen 6 jeweils auf der der Textilfläche 8 zugewendeten Seite einen Schlitz vorzusehen, in den schlauchförmigen Strickrand 14 ein gegenüber dem Tragrahmen 6 einen geringeren Querschnitt aufweisenden Stab oder Rohr einzusetzen und diese so gebildete Einheit in Form einer Keder-Verbindung in den Tragrahmen 6 einzusetzen, wodurch wiederum eine Halterung der Textilfläche 8 am Tragrahmen 6 erzielbar ist.

Unabhängig davon wäre es aber auch noch möglich, in Längserstreckung des Strickrandes 14 mehrere voneinander distanzierte, jedoch hier nicht näher dargestellte Öffnungen in diesem auszubilden. Zur Halterung der Textilfläche 8 sind dann am Tragrahmen 6 als Halteelemente beispielsweise Zapfen vorgesehen, in die der Strickrand 14 mit seinen Öffnungen eingehängt wird und so ebenfalls eine Halterung der Textilfläche 8 am Tragrahmen 6 erzielbar ist. Diese Halteelemente in Form von Zapfen oder Haken können beispielsweise im Bereich der Unterseite bzw. Rückseite der Rückenlehne 2 bzw. des Sitzteiles 3 angeordnet sein, um die Verletzungsgefahr bzw. auch ein Hängen bleiben zu minimieren bzw. zu verhindern.

Weiters ist es vorteilhaft, wenn die Textilfläche 8 in deren benötigten Form zur Gänze bzw. in der benötigten dreidimensionalen Raumform einstückig formgestrickt ist, wobei dadurch auch die Strickränder 14 mitumfasst sind. Dadurch wird zumindest eine Schicht 7 der Polsterung 5 geschaffen, welche in ihrer Form und Abmessung vollkommen fertig vorliegt und so keine weiteren Nacharbeiten, wie beispielsweise das Annähen von Befestigungsvorrichtungen, Schlaufen oder dgl. notwendig sind.

Weiters ist es im Rahmen der Herstellung der Textilfläche 8 möglich, eine designmäßige Gestaltung der dem Benutzer zugewandeten Seite der Polsterung 5 zu schaffen. Dies kann beispielsweise im Zuge des Herstellungsvorganges durch mittels unterschiedlich eingefärbter Fäden ausgebildete Strickmuster, beispielsweise in Form von Logos, Bildern, Sitzplatznummern oder dgl. erfolgen. Damit wird die Möglichkeit geschaffen, individuell das Erscheinungsbild der Polsterung 5 an den jeweiligen Betreiber bzw. Inhaber der Fluglinie, der Eisenbahnlinie, dem Autobusunternehmen bzw. dem Automobilhersteller anpassen zu können.

Darüber hinaus ist es möglich, die Textilfläche 8 mit hier nicht näher dargestellten Mitteln einer unterschiedlichen, parallel zur Textilfläche 8 ausgerichteten Vorspannung auszusetzen bzw. diese variierbar zu gestalten, um so die Härte auf den jeweiligen Benutzer des Fahrgastsitzes 1 besser und individueller abstimmen zu können. Je höher die Vorspannung gewählt wird, desto härter bzw. fester wird der auf den Benutzer erzeugt Gegendruck. Damit ist es möglich, die Polsterung 5 individuell auf das Körpergewicht des Benutzers bzw. dessen individuellen Vorstellungen und Bedürfnissen einfach und ohne hohen Aufwand einstellen zu können. Durch die Auswahl der Textilfläche 8 für die Polsterung 5 wird ein in seinem Werkstoffanteil geringer Bauteil geschaffen, der ohne großen Aufwand gereinigt, ausgetauscht bzw. ersetzt werden kann. Gleichfalls weist die Textilfläche trotz der hohen aufzunehmenden Kräfte ein geringes Gewicht auf, wodurch im ständigen Transportvolumen bzw. Gewicht ein hohes Einsparungspotential geschaffen wird. Damit können weiters Kosten für den laufenden Betrieb eingespart werden.

Aufgrund der vielfältigen Möglichkeiten der Herstellung der Textilfläche 8 ist es möglich, dass diese Textilfläche 8 über seine Flächenausdehnung eine unterschiedliche Stärke und damit verbundenen senkrechten Abstand zwischen den beiden Lagen 12 bzw. 13 aufweist. Damit ist es beispielsweise möglich, im höher belasteten Sitzbereich eine härtere und festere Textilfläche 8 als in jenem Bereich, welcher den Oberschenkeln zugewandt ist, zu erzielen. Damit kann auch bei längerem Sitzen im Zuge von Langstreckenflügen die Gefahr von durch Thrombosen hervorgerufenen Embolien herabgesetzt bzw. vermieden werden. Eine Ursache dafür war meist eine Venenthrombose, bei der ein im Bein gebildetes Blutgerinnsel bis hin zum Herzen gelangte und hier bereits einen medizinischen Schaden anrichtete und eine Lungenarterie verstopfte bzw. weiter hin zur Lunge transportiert wird und eine Schädigung dieses Organs verursachte. So ist es wichtig, die Blutzirkulation im Bereich der Oberschenkel weitgehend im normalen Maße aufrecht zu erhalten, wodurch der Druck ausgehend vom Sitz hin auf die in den Beinen angeordneten Venen möglichst gering gehalten werden soll.

Die einzelnen, vereinfacht dargestellten Fäden 9 bis 11 können ihrerseits wiederum durch eine Vielzahl von Fasern gebildet sein, welche zu einem der Fäden 9 bis 11 zusammengefasst sind. So können die einzelnen Fäden 9 bis 11 oder Fasern aus einem organischen und/ oder anorganischen und/oder metallischen Werkstoff gebildet sein und zueinander auch noch eine unterschiedliche Elastizität und/oder Härte und/oder Abmessung aufweisen. Weiters können die Fäden 9 bis 11 oder Fasern aus der Gruppe der Werkstoffe umfassend Glas, Kohle, Aramide, Metall, Stahl, Keramik, Kunststoff, Carbon, Baumwolle, Hanf sowie tierischer Haare gewählt sein. Die Fasern können weiters durch Elastomerfasern aus Polyurethan, Polyetheramid, Polyetheresteramid, Polyolefinkomponenten, Polyesterkomponenten oder einem Gemisch daraus gebildet sein. Weiters können die Elastomerfasern aus Elastan®, Lycra® oder anderen handelsüblichen Elastomerfasern oder einer Bikomponentenfaser bestehen. Darüber hinaus können die Fasern oder Fäden 9 bis 11 aus Spinnfasern aus einer Gruppe umfassend Aramid- und/oder Paraaramidfasern, wie Kevlar® (Poly(p-phenylen-terephthalamid), Nomex® (Aramid aus m-Phenylendiamin und Isophthalsäure), Twaron®, Technora, Teijinconex, Phenol-Formaldehydfasern, wie Kynol, Polyamid/Polyimidfasern wie Kermel, Polybenzimidazolfasern oder Fasergemischen daraus ausgewählt sein. Weiters können die Aramid- und/oder Paraaramidfasern mit Carbon- (Beltron®, Zefstat, Negastat, Resistat), Stahl-, Kupfer- und/oder Metallfasern gemischt sein. Es wäre aber auch möglich, dass die Aramid- und/oder Paraaramidfasern mit Carbon- bzw. Metallfasern und Elastomerfasern gemischt sind.

Um den strengen Normen sowie Vorschriften im Flugzeugbereich gerecht zu werden, ist es vorteilhaft, wenn zumindest einzelne Fäden 9 bis 11 oder Fasern der Textilfläche 8 des Abstandsgestricks flammhemmend und/oder elektrisch leitend ausgebildet sind. Es wäre aber auch möglich, dass zumindest einzelne Fäden 9 bis 11 oder Fasern der Textilfläche 8 des Abstandsgestricks mit einer Beschichtung und/oder einer Imprägnierung versehen sind. Als Beschichtung und/oder Imprägnierung können beispielsweise Nanopartikel, Lacke, Oberflächenveredelungen usw. Verwendung finden. Vorteilhaft ist es weiteres, wenn die Beschichtung und/oder die Imprägnierung flammhemmend ausgebildet ist.

Die Textilfläche 8 des Abstandsgestricks kann zur Erhöhung der Festigkeit zumindest bereichsweise durch ein so genanntes Keilriemengestrick 15 gebildet sein, wie dies in strichlierten Linien vereinfacht dargestellt ist. Dabei umschlingen einzelne Fäden 9 - 11 den oder die Tragrahmen 6 und sind durchlaufend zwischen diesen ausgebildet. Eine Einbindung mit dem Polfaden ist dabei möglich. Dadurch können schlagartig auftretende Belastungen, wie diese beispielsweise bei Notlandungen gefordert bzw. vorgeschrieben sind, abgefangen werden. Dieses Keilriemengestrick 15 kann in das Abstandsgestrick zur Bildung der Textilfläche 8 mit in diesem integriert sein und sich sowohl quer zur Polsterung als auch in Richtung der Tiefe derselben verlaufen. Dadurch wird einerseits ein entsprechender Sitzkomfort ermöglicht und andererseits können dadurch schlagartige Belastungen aufgefangen werden und so die Verletzungsgefahr des Benutzers bei einem Riss der Textilfläche und einer damit verbundenen Kollision mit dem Traggestell 4 oder anderer Teile vermieden werden.

Weiters ist hier noch vereinfacht dargestellt, dass die Polsterung 5 gegebenenfalls zumindest bereichsweise eine zumindest einlagige Schutzschicht 16 umfasst, welche beispielsweise durch einen flammhemmend ausgebildeten Bezugstoff 17 gebildet sein kann. So kann beispielsweise die Schutzschicht 16 zumindest in jenem Bereich der Polsterung 5 angeordnet sein, welche dem Benutzer zugewendet ist. Bevorzugt überspannt die Schutzsicht 16 die Textilfläche 8 und umfasst zumindest bereichsweise den Tragrahmen 6 und kann dort mittels einer vereinfacht dargestellten Verbindungsvorrichtung 18, wie beispielsweise einer Klettbandanordnung oder ähnlichem, befestigt bzw. gehaltert sein. Dadurch kann die Textilfläche 8 zur Aufnahme und Abstützung der vom Benutzer auf diese einwirkenden Kräfte ausgebildet sein und die Schutzschicht 16 übernimmt eine abdeckende sowie schützende Wirkung der Textilfläche 8. Damit kann auf einfach Art und Weise eine Reinigung und falls notwendig ein Austausch einfach erfolgen. Ist die Schutzschicht 16 mehrlagig ausgebildet kann diese auch noch durch einen bevorzugt mit flüssigem Flammschutzmittel getränkten Kunststoffschaum gebildet sein.

Weiters kann, wie dies vereinfacht in der Fig. 2 dargestellt ist, die Polsterung 5 zumindest bereichsweise zumindest ein Funktionselement 19 umfassen, welches der Textilfläche 8 zugeordnet ist. Die unterschiedlichen An- bzw. Zuordnungsmöglichkeiten sowie die unterschiedlichen Möglichkeiten zur Ausbildung der Funktionselemente 19 werden nachfolgen beschrieben und können diese beliebig miteinander kombiniert werden. In diesem hier gezeigten Ausführungsbeispiel ist eines der Funktionselemente 19 in Form zumindest eines Schaumstoffelementes 20 ausgebildet, welches an einer vom Benutzer abgewendeten Seite der Textilfläche 8 angeordnet ist. So kann das Schaumstoffelement 20 von der Textilfläche 8 distanziert angeordnet sein, um eine Verformung der Textilfläche zuzulassen und erst bei einer stärkeren Verformung die Textilfläche mit dem Schaumstoffelement 20 in Berührung kommt und dieses die weitere Abstützung übernimmt. Eine Abstützung bzw. Auflagerung des Schaumstoffelements 20 kann auf einem hier nicht näher dargestellten Bauteil des Traggestells 4 erfolgen.

Aufgrund der Vorspannung und der damit verbundenen Tragfähigkeit der Textilfläche 8 wird das auf die Polsterung 5 einwirkende Gewicht des Benutzers von dieser zumindest über einen Großteil auf den Tragrahmen 6 abgetragen. Erfolgt eine höhere Belastung auf die Polsterung 5 hin in Richtung auf das Schaumstoffelement 20, wie dies beispielsweise durch Personen mit einem höheren Körpergewicht erfolgen kann bzw. aber auch falls die Vorspannung der Textilfläche 8 geringer gewählt wird, erfolgt eine gewisse Lastübertragung hin auf das unterhalb der Textilfläche 8 angeordnete Schaumstoffelement 20. Auch dieses als Funktionselement 19 ausgebildete Schaumstoffelement 20 kann zumindest bereichsweise von einer eigenen Schutzschicht 16 umgeben bzw. umhüllt sein. Bevorzugt ist das Schaumstoffelement 20 mit der Schutzschicht 16 vollständig umhüllt bzw. eingeschlossen, wodurch Beschädigungen und ein zu starker Schmutzeintritt in das Schaumstoffgerüst vermieden wird.

Darüber hinaus kann es sich als vorteilhaft erweisen, wenn im Schaumstoffelement 20 zumindest eine Stützvorrichtung 21 eingesetzt bzw. eingebettet ist. Diese Stützvorrichtung 21 kann beispielsweise durch einen Federkern, insbesondere aus Nirosta, gebildet sein, wie dies im rechten Teil der Fig. 2 dargestellt ist. Anstelle des die Stützvorrichtung 21 bildenden Federkerns 22 könnte diese aber auch durch ein weiteres Schaumstoffelement 23 aus einem Kunststoffschaum gebildet sein, der bezüglich des ersten Schaumstoffelements 20 eine höhere Härte aufweist und die schematisch im linken Teil des Schaumstoffelements 20 angedeutet ist.

Das Schaumstoffelement 20, 23 kann aus der Gruppe der Schaumstoffe umfassend PUR-Kunststoffschaum mit bevorzugt offenzelliger Schaumstruktur, Kunststoffschaum mit viskoelastischem Verhalten, offenzelligen PUR-Kunststoffschaum auf Esterbasis mit viskoelastischem Verhalten, Polyimidschaum, Polyetherschaum, Silikon oder einen Silikonelastomerschaum gebildet sein. Das Schaumstoffelement 20, 23 kann eine Dichte bzw. ein Raumgewicht zwischen 30 kg/m³ und 100 kg/m³, bevorzugt zwischen 40 kg/m³ und 70 kg/m³, aufweisen. Das Schaumstoffelement 20, 23 kann weiters eine Härte zwischen 120 N und 450 N, bevorzugt zwischen 180 N und 220 N, mit einer Stauchhärte von 1 kPa bis 15 kPa bei einer Eindrucktiefe von 40 % aufweisen. Es wären aber Dichtewerte bzw. ein Raumgewicht zwischen 5 kg/m³ und 90 kg/m³, bevorzugt zwischen 15 kg/m³ und 70 kg/m³, möglich. Zur Erzielung einer höheren Tragfestigkeit kann aber auch das Schaumstoffelement 20,23 eine Härte zwischen 800 N und 4000 N und eine Stauchhärte zwischen 30 kPa und 100 kPa bei 40 % Eindrucktiefe aufweisen. Es sind aber Härten zwischen 150 N und 550 N, bevorzugt von 400 N, möglich. Die Stauchhärte des Schaumstoffelementes 20, 23, insbesondere des PUR-Kunststoffschaumes, kann aber auch zwischen 1 kPa bis 20 kPa, bevorzugt zwischen 5 kPa und 10 kPa, bei 40 % Eindrucktiefe betragen. Ist das Schaumstoffelement 20, 23 beispielsweise durch einen offenzelligen PUR-Kunststoffschaum auf Esterbasis mit viskoelastischem Verhalten ausgebildet, so kann dieses eine Dichte bzw. ein Raumgewicht zwischen 50 kg/m³ und 80 kg/m³, bevorzugt zwischen 60 kg/m³ und 70 kg/m³, bei einer Stauchhärte zwischen 6 kPa und 25 kPa bei 40 % Eindrucktiefe aufweisen. Dabei sind aber auch Stauchhärten zwischen 11 kPa und 25 kPa, bevorzugt zwischen 15 kPa und 20 kPa, bei 40 % Eindrucktiefe möglich.

Zur Erzielung der vorgeschriebenen Abbrandwerte bzw. um den strengen Prüfnormen im Flugzeugbau gerecht zu werden, kann dem Schaumstoffelement 20, 23 zumindest ein Flammschutzmittel zugesetzt und/oder das Schaumstoffelement 20, 23 mit diesem Flammschutzmittel imprägniert sein. Auf eine Darstellung desselben wurde der besseren Übersichtlichkeit halber verzichtet.

So kann beispielsweise das Flammschutzmittel pulverförmig ausgebildet sein. Dabei kann als Flammschutzmittel ein Hydrat oder ein Hydroxyd, insbesondere ein Aluminiumhydroxyd oder ein Hydrat eines Zinksalzes sein. Weiters kann das Flammschutzmittel bei Temperaturerhöhung Stickoxyde freisetzende Bestandteile aufweisen und z. B. durch Melamin, Amoniumpolyphosphat usw. gebildet sein. Unabhängig davon wäre es aber auch möglich, dass das Flammschutzmittel bei Temperaturerhöhung volumenvergrößernd ist und z.B. durch Kohlenstoff, Graphit gebildet ist. Die Menge des pulverförmigen Flammschutzmittels, welches dem Schaumstoffelement 20, 23 zugesetzt ist, kann zwischen 15 Gewichtsteilen und 50 Gewichtsteilen, bevorzugt zwischen 20 Gewichtsteilen und 40 Gewichtsteilen, des Schaumstoffelements 20, 23 betragen. Unabhängig davon könnte aber auch das Flammschutzmittel bei Temperaturerhöhung Halogene freisetzende Bestandteile aufweisen und z. B. durch organische Phosphorsäureverbindungen gebildet sein, welche bevorzugt flüssig sind. Wird ein derartiges Halogene freisetzendes Flammschutzmittel verwendet, kann die zugesetzte Menge zwischen 1 Gewichtsteil und 20 Gewichtsteilen, bevorzugt zwischen 5 Gewichtsteilen und 12 Gewichtsteilen, des Schaumstoffelements 20, 23 betragen.

So ist es beispielsweise möglich, dass in der Textilfläche 8 zumindest bereichsweise zumindest eines der Funktionselemente 19 integriert ist. Dies bedeutet, dass das oder die Funktionselemente 19 zwischen den Lagen 12, 13 angeordnet bzw. eingebettet sind. Ein Anbindung an die Polfäden ist dabei zumindest bereichsweise möglich. Auch können einzelne Abschnitte des oder der Funktionselemente 19 die Lagen 12, 13 durchragen und so aus der Textilfläche vorragen. Weiters ist hier noch vereinfacht dargestellt, dass innerhalb der Textilfläche 8 des Abstandsgestricks zumindest ein Aufnahmeraum 24 zwischen den Lagen 12, 13 ausgebildet ist, welcher zur Aufnahme zumindest eines Funktionselementes 19 ausgebildet ist bzw. dient. Wird der innerhalb der Textilfläche 8 vorgesehene Aufnahmeraum 24 in seiner Größe entsprechend ausgelegt, kann als Funktionselement 19 ein Luftpolster 25 Verwendung finden. Dieser Luftpolster 25 ist von den Lagen 12, 13 der Textilfläche 8 abgedeckt, wobei in diesem Bereich auch die Anordnung von Polfäden unterbleibt. Zur Variierung der Sitzhärte und des damit verbunden Sitzkomforts kann der Luftpolster 5 in seinem Volumen und/oder seiner Härte veränderbar ausgebildet sein. Auf die Zuordnung von entsprechenden Versorgungseinrichtungen bzw. und Regelorganen wurde der besseren Übersichtlichkeit halber verzichtet und können aus dem bekannten Stand der Technik Anwendung finden.

Das Funktionselement 19 kann aber auch durch ein hier nicht näher dargestelltes Temperierelement gebildet sein. Wird als Temperierelement beispielsweise ein Widerstandsdraht oder ein Heizdraht verwendet, kann dieser sowohl während der Herstellung der Textilfläche 8 als auch nachträglich in dieselbe eingebracht werden. Bei Beaufschlagung mit elektrischer Energie und einem Durchfluss wird der Heizdraht erwärmt und gibt diese erzeugte Wärme an den Benutzer ab. Dadurch kann ein günstiges und angenehmes Sitzklima geschaffen werden. Wird der Werkstoff einzelner Fäden 9 bis 11 der Textilfläche 8 entsprechend ausgewählt, können diese bereits das Temperierelement bilden. Es wäre aber auch möglich, das Temperierelement durch einen Schlauch zur Aufnahme und/oder Abgabe eines Temperiermediums zu bilden. Die Zustandsform des verwendeten Temperiermediums kann sowohl gasförmig als auch flüssig bzw. eine Kombination daraus gewählt sein und beispielsweise durch Luft, Wasser oder anderer nicht brennbarer fließ- bzw. strömungsfähiger Elemente gebildet sein,

Das Funktionselement 19 kann beispielsweise aber auch durch ein aktives oder passives Bauteil, einen Sensor, ein Piezo-Element, ein Peltier-Element, ein Speicherelement, ein Sendeelement, einen Aktor, ein Anzeigeelement, einen Lichtleiter, ein sichtbare Strahlung abgebendes Element, einen integrierten Schaltkreis, einen Schalter, einen Stecker, einen Transponder gebildet sein. Diese Vielzahl von zuvor genannten Funktionselementen ist nur beispielhaft angeführt, wobei diese untereinander beliebig kombiniert werden können. Es wären aber auch Mehrfachanordnungen möglich. Diese Funktionselemente 19 können darüber hinaus aber auch noch mit einer Steuer- oder Auswertevorrichtung wirkverbunden sein. So können beispielsweise von einem Sensor ermittelte Werte über eine nicht näher dargestellte Leitungsverbindung an die Steuer- oder Auswertevorrichtung weitergeleitet werden, um durch eine Rechnereinheit sowie gegebenenfalls der Steuervorrichtung eine Anpassung an die vorgegebenen Sollwerte durchzuführen.

Ist das Funktionselement 19 durch das auf der vom Benutzer abgewendeten Seite der Textilfläche 8 angeordnete Schaumstoffelement 20 gebildet, kann die im Bereich der dem Benutzer zugewendeten Oberseite der Polsterung 5 angeordnete Schutzschicht 16 sich hin bis zu einer vom Benutzer abgewendeten Seite des Schaumstoffelements 20 erstrecken, wie dies im rechten Teil der Fig. 2 in strichlierten Linien angedeutet ist. Zur Verbindung bzw. Halterung kann wiederum die Verbindungsvorrichtung 18 vorgesehen sein.

Weiters ist im linken unteren Teil der Fig. 2 in strichpunktierten Linien vereinfacht dargestellt, dass dem als Funktionselement 19 ausgebildeten Schaumstoffelement 20 auf der vom Benutzer abgewendeten Seite zumindest eine weitere Schicht 26 zugeordnet ist. Diese weitere Schicht 26 kann dem Schaumstoffelement 20 an dessen Unterseite, also an der vom Benutzer abgewandten Seite, durchlaufend zugeordnet sein und sich hin bis zu dem oder den Tragrahmen 6 erstrecken und an diesem gehaltert sein. Wird diese Schicht 26 ausreichend stark und fest dimensioniert, kann diese einerseits als Schutzschicht für das Schaumstoffelement 20 dienen und andererseits eine tragende bzw. stützende Funktion für das Schaumstoffelement 20 ausbilden. Es wäre dabei möglich, dass das Funktionselement 19, insbesondere das Schaumstoffelement 20, mit der weiteren Schicht 26 verbunden ist.

Anstelle oder zusätzlich zu der in der Fig. 2 dargestellten Anordnung des Funktionselements 19 als Schaumstoffelement 20, kann ein weiteres Funktionselement 19 als Schaumstoffelement 20 auch an der dem Benutzer zugewendeten Seite der Textilfläche 8, also im Bereich der Sitzfläche, angeordnet sein. Dieses weitere Funktionselement 19 kann zumindest bereichsweise oder aber auch vollflächig vorgesehen sein. Dabei können unterschiedlichst miteinander kombinierte Qualitäten sowie Härten des Schaumstoffs eingesetzt werden um ein möglichste beschwerdefreies und vor allem langes Sitzen auf der Polsterung 5 zu ermöglichen. Dieses Funktionselement 19 in Form des Schaumstoffelements 20 kann nicht nur direkt im stark belasteten Sitzbereich, sondern auch in jenem Bereich der Polsterung 5 vorgesehen sein, welcher dem Oberschenkel des Benutzers zugewendet ist. Darüber hinaus kann sich das Schaumstoffelement 20 auch über die Vorderkante der Polsterung 5, also jenem Bereich, welcher den Kniekehlen eines Benutzers zugewandt ist, vorgesehen sein. Das als Funktionselement 19 ausgebildete Schaumstoffelement 20 oder die Schaumstoffelemente 20 können aber auch in senkrechter Richtung zur Textilfläche 8 gesehen eine unterschiedliche Dicke bzw. Stärke aufweisen, gegebenenfalls einander überlappen, um so beispielsweise eine bessere Stützfunktion bzw. eine Vorformung der Sitzfläche auszubilden.

In der Fig. 3 ist eine weitere mögliche und gegebenenfalls für sich eigenständige Ausbildung der Polsterung 5 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Bei diesem hier gezeigten Ausführungsbeispiel umfasst die Polsterung 5 zumindest zwei Schichten 7 von Textilflächen 8 des Abstandsgestricks. Die Anordnung von mehreren Schichten 7 der Textilfläche 8 kann dazu dienen, höhere Kräfte übertragen zu können bzw. die einzelnen Schichten 7 auf individuelle Anwendungsfälle besser einstellen zu können. Werden darüber hinaus auch noch unterschiedliche Qualitäten bei den verwendeten Fäden 9 bis 11 eingesetzt, kann beispielsweise die hier vom Benutzer abgewendete Schicht 7 thermisch behandelt werden, um so beispielsweise ein teilweises Anschmelzen bzw. Verschmelzen der einzelnen Fäden 9 bis 11 zu erzielen, um so eine bessere Abschirmung für die dem Benutzer zugewandte Schicht 7 zu erreichen.

Darüber hinaus ist es auch noch möglich, zwischen den Schichten 7 zumindest bereichsweise eines der Funktionselemente 19 anzuordnen. Hier ist als Funktionselement 19 das Schaumstoffelement 20 gewählt, wobei aber auch jede beliebige andere Kombinationen mit den zuvor beschriebenen Funktionselementen 19 möglich ist.

Die Ausführungsbeispiele zeigen mögliche Ausführungsvarianten der Polsterung, wobei an dieser Stelle bemerkt sei, dass die Erfindung nicht auf die speziell dargestellten Ausführungsvarianten derselben eingeschränkt ist.

### Bezugszeichenaufstellung

- 1: Fahrgastsitz
- 2: Rückenlehne
- 3: Sitzteil
- 4: Traggestell
- 5: Polsterung

- 6: Tragrahmen
- 7: Schicht
- 8: Textilfläche
- 9: Faden
- 10: Faden

- 11: Faden
- 12: Lage
- 13: Lage
- 14: Strickrand
- 15: Keilriemengestrick

- 16: Schutzschicht
- 17: Bezugsstoff
- 18: Verbindungsvorrichtung
- 19: Funktionselement
- 20: Schaumstoffelement

- 21: Stützvorrichtung
- 22: Federkern
- 23: Schaumstoffelement
- 24: Aufnahmeraum
- 25: Luftpolster

- 26: Schicht

## Patentansprüche

1. Polsterung (5) für einen Fahrgastsitz (1) mit einem Traggestell (4), insbesondere einen Flugzeugsitz, umfassend zumindest eine Schicht (7, 26), die durch eine Textilfläche (8) aus Fäden (9 bis 11) und/oder diese Fäden (9 bis 11) bildenden Fasern gebildet ist, wobei die Textilfläche (8) zumindest bereichsweise durch ein Abstandsgestrick aus zumindest zwei voneinander distanzierten Lagen (12, 13) und sich dazwischen erstreckenden Polfäden gebildet ist, und an der von einem Benutzer abgewendeten Seite der Textilfläche (8) zumindest bereichsweise zumindest ein als Schaumstoffelement (20) ausgebildetes Funktionselement (19) angeordnet ist, **dadurch gekennzeichnet, dass** die Textilfläche (8) mit einer parallel zu dieser ausgerichteten Vorspannkraft zumindest bereichsweise mit einem Tragrahmen (6) des Traggestells (4) verbunden ist und dass das Schaumstoffelement (20) von der Textilfläche (8) in senkrechter Richtung dazu distanziert angeordnet ist.

2. Polsterung (5) nach Anspruch 1, **dadurch gekennzeichnet, dass** die Textilfläche (8) in der benötigten dreidimensionalen Raumform einstückig formgestrickt ist.

3. Polsterung (5) nach Anspruch 1 oder 2, **dadurch gekennzeichnet, dass** die Textilfläche (8) mehrlagig ausgeführt ist.

4. Polsterung (5) nach einem der vorhergehenden Ansprüche, **dadurch gekennzeichnet, dass** die Textilfläche (8) bereichsweise durch ein Keilriemengestrick gebildet ist.

5. Polsterung (5) nach einem der vorhergehenden Ansprüche, **dadurch gekennzeichnet, dass** die Textilfläche (8) über seine Flächenausdehnung eine unterschiedliche Stärke aufweist.

6. Polsterung (5) nach einem der vorhergehenden Ansprüche, **dadurch gekennzeichnet, dass** die Textilfläche (8) an deren äußeren Umfang zumindest bereichsweise Strickränder (14) aufweist.

7. Polsterung nach Anspruch 6, **dadurch gekennzeichnet, dass** in Längserstreckung des Strickrandes (14) mehrere voneinander distanzierte Öffnungen ausgebildet sind.

8. Polsterung (5) nach Anspruch 6 oder 7, **dadurch gekennzeichnet, dass** der Strickrand (14) als Schlauch ausgebildet ist.

9. Polsterung (5) nach einem der vorhergehenden Ansprüche, **dadurch gekennzeichnet, dass** zumindest einzelne Fäden (9 - 11) oder Fasern der Textilfläche (8) des Abstandsgestricks mit einer Beschichtung versehen sind.

10. Polsterung (5) nach einem der vorhergehenden Ansprüche, **dadurch gekennzeichnet, dass** zumindest einzelne Fäden (9 - 11) oder Fasern der Textilfläche (8) des Abstandsgestricks mit einer Imprägnierung versehen sind.

11. Polsterung (5) nach Anspruch 9 oder 10, **dadurch gekennzeichnet, dass** die Beschichtung und/oder die Imprägnierung aus der Gruppe von Nanopartikel, Lacken, Oberflächenveredelungen gewählt ist.

12. Polsterung (5) nach einem der Ansprüche 9 bis 11, **dadurch gekennzeichnet, dass** die Beschichtung und/oder die Imprägnierung flammhemmend ausgebildet ist.

13. Polsterung (5) nach einem der vorhergehenden Ansprüche, **dadurch gekennzeichnet, dass** die Fäden (9 - 11) oder Fasern aus einem organischen und/oder anorganischen und/oder metallischen Werkstoff gebildet sind.

14. Polsterung (5) nach einem der vorhergehenden Ansprüche, **dadurch gekennzeichnet, dass** die Fäden (9 - 11) oder Fasern von unterschiedlicher Elastizität und/oder Härte und/oder Abmessung sind.

15. Polsterung (5) nach einem der vorhergehenden Ansprüche, **dadurch gekennzeichnet, dass** die Fäden (9 - 11) oder Fasern aus der Gruppe der Werkstoffe umfassend Glas, Kohle, Aramide, Metall, Stahl, Keramik, Kunststoff, Carbon, Baumwolle, Hanf, tierische Haare gewählt sind.

16. Polsterung (5) nach einem der vorhergehenden Ansprüche, **dadurch gekennzeichnet, dass** die Fasern durch Elastomerfasern aus Polyurethan, Polyetheramid, Polyetheresteramid, Polyolefinkomponenten, Polyesterkomponenten oder einem Gemisch daraus gebildet sind.

17. Polsterung (5) nach Anspruch 16, **dadurch gekennzeichnet, dass** die Elastomerfasern aus Elastan®, Lycra® oder anderen handelsüblichen Elastomerfasern oder einer Bikomponentenfaser bestehen.

18. Polsterung (5) nach einem der vorhergehenden Ansprüche, **dadurch gekennzeichnet, dass** die Fasern oder Fäden (9 - 11) aus Spinnfasern aus einer Gruppe umfassend Aramid- und/oder Paraaramidfasern, wie Kevlar® (Poly(p-phenylen-terephthalamid), Nomex® (Aramid aus m-Phenylendiamin und Isophthalsäure), Twaron®, Technora, Teijinconex, Phenol-Formaldehydfasern, wie Kynol, Polyamid/Polyimidfasern wie Kermel, Polybenzimidazolfasern oder Fasergemischen daraus ausgewählt sind.

19. Polsterung (5) nach Anspruch 18, **dadurch gekennzeichnet, dass** die Aramid- und/oder Paraaramidfasern mit Carbon-(Beltron®, Zefstat, Negastat, Resistat), Stahl-, Kupfer- und/oder Metallfasern gemischt sind.

20. Polsterung (5) nach Anspruch 18 oder 19, **dadurch gekennzeichnet, dass** die Aramid- und/oder Paraaramidfasem mit Carbon- bzw. Metallfasern und Elastomerfasern gemischt sind.

21. Polsterung (5) nach einem der vorhergehenden Ansprüche, **dadurch gekennzeichnet, dass** zumindest einzelne Fäden (9 - 11) oder Fasern der Textilfläche (8) des Abstandsgestricks flammhemmend ausgebildet sind.

22. Polsterung (5) nach einem der vorhergehenden Ansprüche, **dadurch gekennzeichnet, dass** zumindest einzelne Fäden (9 - 11) oder Fasern der Textilfläche des Abstandsgestricks elektrisch leitend ausgebildet sind.

23. Polsterung (5) nach einem der vorhergehenden Ansprüche, **dadurch gekennzeichnet, dass** dem Schaumstoffelement (20) auf der vom Benutzer abgewendeten Seite zumindest eine weitere Schicht (26) zugeordnet ist.

24. Polsterung (5) nach Anspruch 23, **dadurch gekennzeichnet, dass** das Schaumstoffelement (20) mit der weiteren Schicht (26) verbunden ist.

25. Polsterung (5) nach einem der vorhergehenden Ansprüche, **dadurch gekennzeichnet, dass** zumindest bereichsweise zumindest ein weiteres Schaumstoffelement (20) an der dem Benutzer zugewendeten Seite der Textilfläche (8) angeordnet ist.

26. Polsterung (5) nach einem der vorhergehenden Ansprüche, **dadurch gekennzeichnet, dass** innerhalb der Textilfläche (8) des Abstandsgestricks zumindest ein Aufnahmeraum (24) für zumindest ein weiteres als Luftpolster (25) ausgebildetes Funktionselement (19) ausgebildet ist.

27. Polsterung (5) nach Anspruch 26, **dadurch gekennzeichnet, dass** der Luftpolster (25) in seinem Volumen und/oder seiner Härte veränderbar ausgebildet ist.

28. Polsterung (5) nach Anspruch 1, **dadurch gekennzeichnet, dass** das Schaumstoffelement (20, 23) aus einer Gruppe umfassend PUR-Kunststoffschaum mit bevorzugt offenzelliger Schaumstruktur, Kunststoffschaum mit viskoelastischem Verhalten; offenzelligen PUR-Kunststoffschaum auf Esterbasis mit viscoelastischem Verhalten, Polyimidschaum, Polyetherschaum, Silikon- oder einen Silikonelastomerschaum gebildet ist.

29. Polsterung (5) nach Anspruch 1 oder 28, **dadurch gekennzeichnet, dass** das Schaumstoffelement (20, 23) eine Dichte bzw. ein Raumgewicht zwischen 30 kg/m³ und 100 kg/m³, bevorzugt zwischen 40 kg/m³ und 70 kg/m³, aufweist.

30. Polsterung (5) nach einem der Ansprüche 1, 28 oder 29, **dadurch gekennzeichnet, dass** das Schaumstoffelement (20, 23) eine Härte zwischen 120 N und 450 N, bevorzugt zwischen 180 N und 220 N, mit einer Stauchhärte von 1 kPa bis 15 kPa bei einer Eindrucktiefe von 40 % aufweist.

31. Polsterung (5) nach einem der Ansprüche 1, 28 bis 30, **dadurch gekennzeichnet, dass** das Schaumstoffelement (20, 23) eine Dichte bzw. ein Raumgewicht zwischen 5 kg/m³ und 90 kg/m³, bevorzugt zwischen 15 kg/m³ und 70 kg/m³, aufweist.

32. Polsterung (5) nach einem der Ansprüche 1, 28 bis 31, **dadurch gekennzeichnet, dass** das Schaumstoffelement (20, 23) eine Härte zwischen 800 N und 4000 N und eine Stauchhärte zwischen 30 kPa und 100 kPa bei 40 % Eindrucktiefe aufweist.

33. Polsterung (5) nach einem der Ansprüche 1, 28 bis 32, **dadurch gekennzeichnet, dass** das Schaumstoffelement (20,23) eine Härte zwischen 150 N und 550 N, bevorzugt 400 N, aufweist.

34. Polsterung (5) nach einem der Ansprüche 1, 28 bis 33, **dadurch gekennzeichnet, dass** die Stauchhärte des Schaumstoffelementes (20, 23) zwischen 1 kPa bis 20 kPa, bevorzugt zwischen 5 kPa und 10 kPa, bei 40 % Eindrucktiefe beträgt.

35. Polsterung (5) nach einem der Ansprüche 1, 28 bis 34, **dadurch gekennzeichnet, dass** das Schaumstoffelement (20, 23) eine Dichte bzw. ein Raumgewicht zwischen 50 kg/m³ und 80 kg/m³, bevorzugt zwischen 60 kg/m³ und 70 kg/m³, aufweist und bevorzugt durch einen offenzelligen PUR-Kunststoffschaum auf Esterbasis mit viscoelastischem Verhalten ausgebildet ist und eine Stauchhärte zwischen 6 kPa und 25 kPa bei 40 % Eindrucktiefe aufweist.

36. Polsterung (5) nach einem der Ansprüche 1, 28 bis 35, **dadurch gekennzeichnet, dass** im Schaumstoffelement (20) zumindest eine Stützvorrichtung (21) eingesetzt bzw. eingebettet ist.

37. Polsterung (5) nach Anspruch 36, **dadurch gekennzeichnet, dass** die Stützvorrichtung (21) durch einen Federkern (22), insbesondere aus NIROSTA, gebildet ist.

38. Polsterung (5) nach einem der Ansprüche 36 oder 37, **dadurch gekennzeichnet, dass** die Stützvorrichtung (21) durch ein weiteres Schaumstoffelement (23) aus einem Kunststoffschaum mit einer bezüglich des Schaumstoffelements (20) höheren Härte gebildet ist.

39. Polsterung (5) nach einem der Ansprüche 1, 28 bis 38, **dadurch gekennzeichnet, dass** dem Schaumstoffelement (20, 23) zumindest ein Flammschutzmittel zugesetzt und/oder das Schaumstoffelement (20, 23) mit dem Flammschutzmittel imprägniert ist.

40. Polsterung (5) nach Anspruch 39, **dadurch gekennzeichnet, dass** das Flammschutzmittel bei Temperaturerhöhung Stickoxyde freisetzende Bestandteile aufweist und z.B. durch Melamin, Amoniumpolyphosphat usw. gebildet ist.

41. Polsterung (5) nach Anspruch 39, **dadurch gekennzeichnet, dass** das Flammschutzmittel bei Temperaturerhöhung volumenvergrößernd ist und z.B. durch Kohlenstoff, Graphit, gebildet ist.

## Claims

1. Upholstery (5) for a passenger seat (1) with a base frame (4), in particular an aircraft seat, comprising at least one layer (7, 26) formed by a textile surface (8) of yarns (9 to 11) and/or fibres forming these yarns (9 to 11), which textile surface (8) is made up of a knitted spacing fabric in at least certain regions comprising at least two layers (12, 13) spaced apart from one another and pile threads extending in between, and at least one functional element (19) in the form of foam element (20) is disposed in at least certain regions on the side of the textile surface (8) facing away from a user, **characterised in that** the textile surface (8) is connected to at least certain regions of a support frame (6) of the base frame (4) by a tensioning force oriented parallel with it, and the foam element (20) is disposed at a distance apart from the textile surface (8) in the direction perpendicular to it.

2. Upholstery (5) as claimed in claim 1, **characterised in that** the textile surface (8) is knitted in one piece to the required three-dimensional shape.

3. Upholstery (5) as claimed in claim 1 or 2, **characterised in that** the textile surface (8) is of a multi-layered design.

4. Upholstery (5) as claimed in one of the preceding claims, **characterised in that** the textile surface (8) is a knitted fabric disposed in the manner of a pulley belt arrangement in at least certain regions.

5. Upholstery (5) as claimed in one of the preceding claims, **characterised in that** the textile surface (8) is of a differing thickness across its surface extension.

6. Upholstery (5) as claimed in one of the preceding claims, **characterised in that** the textile surface (8) has knitted edges (14) in certain regions at its outer periphery.

7. Upholstery as claimed in claim 6, **characterised in that** several openings are spaced at a distance apart from one another in the longitudinal extension of the knitted edge (14).

8. Upholstery (5) as claimed in claim 6 or 7, **characterised in that** the knitted edge (14) is provided in the form of a hose.

9. Upholstery (5) as claimed in one of the preceding claims, **characterised in that** at least individual yarns (9 - 11) or fibres of the textile surface (8) of the knitted spacing fabric are provided with a coating.

10. Upholstery (5) as claimed in one of the preceding claims, **characterised in that** at least individual yarns (9 -11) or fibres of the textile surface (8) of the knitted spacing fabric are impregnated.

11. Upholstery (5) as claimed in claim 9 or 10, **characterised in that** the coating and/or impregnation is selected from the group comprising nano-particles, varnishes, surface finishes.

12. Upholstery (5) as claimed in one of claims 9 to 11, **characterised in that** the coating and/or impregnation is flame-retardant.

13. Upholstery (5) as claimed in one of the preceding claims, **characterised in that** the yarns (9 - 11) or fibres are made from an organic and/or inorganic and/or metallic material.

14. Upholstery (5) as claimed in one of the preceding claims, **characterised in that** the yarns (9 - 11) or fibres are of differing elasticity and/or hardness and/or dimensions.

15. Upholstery (5) as claimed in one of the preceding claims, **characterised in that** the yarns (9 - 11) or fibres are selected from the group of materials comprising glass, carbon fibres, aramids, metal, steel, ceramic, plastic, carbon, cotton, hemp, animal hairs.

16. Upholstery (5) as claimed in one of the preceding claims, **characterised in that** the fibres are elastomer fibres made from polyurethane, polyether aramide, polyether esteramide, polyolefin components, polyester components or a mixture thereof.

17. Upholstery (5) as claimed in claim 16, **characterised in that** the elastomer fibres are made from Elastane7, Lycra7 or other commercially available elastomer fibres or a dual component fibre.

18. Upholstery (5) as claimed in one of the preceding claims, **characterised in that** the fibres or yarns (9 - 11) are spun fibres from a group comprising aramid and/or para-aramid fibres, such as Kevlar7 (poly-p-phenylene terephthalamide), Nomex7 (aramid ofm-phenylene diamine and isophthalic acid), Twaron7, Technora, Teijinconex, phenol-formaldehyde fibres such as Kynol, polyamide/polyimide fibres such as Kermel, polybenzimidazole fibres or fibre mixtures thereof.

19. Upholstery (5) as claimed in claim 18, **characterised in that** the aramid and/or para-aramid fibres are mixed with carbon (Beltron7, Zefstat, Negastat, Resistat), steel, copper and/or metal fibres.

20. Upholstery (5) as claimed in claim 18 or 19, **characterised in that** the aramid and/or para-aramid fibres are mixed with carbon or metal fibres and elastomer fibres.

21. Upholstery (5) as claimed in one of the preceding claims, **characterised in that** at least individual yarns (9 - 11) or fibres of the textile surface (8) of the knitted spacing fabric are flame-retardant.

22. Upholstery (5) as claimed in one of the preceding claims, **characterised in that** at least individual yarns (9 - 11) or fibres of the textile surface of the knitted spacing fabric are electrically conductive.

23. Upholstery (5) as claimed in one of the preceding claims, **characterised in that** the foam element (20) is provided with at least one other layer (26) on the side facing away from the user.

24. Upholstery (5) as claimed in claim 23, **characterised in that** the foam element (20) is joined to the other layer (26).

25. Upholstery (5) as claimed in one of the preceding claims, **characterised in that** another foam element (20) is disposed in at least certain regions on the side of the textile surface (8) facing the user.

26. Upholstery (5) as claimed in one of the preceding claims, **characterised in that** at least one housing compartment (24) for at least one functional element (19) in the form of another air cushion (25) is provided inside the textile surface (8).

27. Upholstery (5) as claimed in claim 26, **characterised in that** the air cushion (25) is variable in terms of its volume and/or its hardness.

28. Upholstery (5) as claimed in claim 1, **characterised in that** the foam element (20, 23) is selected from a group comprising PUR foamed plastic with a preferably open-cell foam structure, foamed plastic with visco-elastic properties, open-cell PUR foamed plastic with a base of ester with visco-elastic properties, polyimide foam, polyether foam, silicone or a silicone elastomer foam.

29. Upholstery (5) as claimed in claim 1 or 28, **characterised in that** the foam element (20, 23) has a density or weight by volume of between 30 kg/m3 and 100 kg/m3, preferably between 40 kg/m3 and 70 kg/m3.

30. Upholstery (5) as claimed in one of claims 1, 28 and 29, **characterised in that** the foam element (20, 23) has as hardness of between 120 N and 450 N, preferably between 180 N and 220 N, with a compressive hardness of 1 kPa to 15 kPa at an indentation depth of 40%.

31. Upholstery (5) as claimed in one of claims 1, 28 to 30, **characterised in that** the foam element (20, 23) has a density or weight by volume of between 5 kg/m3 and 90 kg/m3, preferably between 15 kg/m3 and 70 kg/m3.

32. Upholstery (5) as claimed in one of claims 1, 28 to 31, **characterised in that** the foam element (20, 23) has a hardness of between 800 N and 4000 N and a compressive hardness of between 30 kPa and 100 kPa at an indentation depth of 40 %.

33. Upholstery (5) as claimed in one of claims 1, 28 to 32, **characterised in that** the foam element (20, 23) has a hardness of between 150 N and 550 N, preferably 400 N.

34. Upholstery (5) as claimed in one of claims 1, 28 to 33, **characterised in that** the compressive hardness of the foam element (20, 23) is between 1 kPa and 20 kPa, preferably between 5 kPa and 10 kPa, at an indentation depth of 40 %.

35. Upholstery (5) as claimed in one of claims 1, 28 to 34, **characterised in that** the foam element (20, 23) has density or weight by volume of between 50 kg/m3 and 80 kg/m3, preferably between 60 kg/m3 and 70 kg/m3, and is preferably made from an open-cell PUR foamed plastic with a base of ester with visco-elastic properties and a compressive hardness of between 6 kPa and 25 kPa at an indentation depth of 40 %.

36. Upholstery (5) as claimed in one of claims 1, 28 to 35, **characterised in that** at least one support device (21) is inserted or embedded in the foam element (20).

37. Upholstery (5) as claimed in claim 36, **characterised in that** the support device (21) is provided in the form of a spring core (22), in particular made from NIROSTA.

38. Upholstery (5) as claimed in one of claims 36 or 37, **characterised in that** the support device (21) is provided in the form of another foam element (23) made from a foamed plastic with a higher hardness than the foam element (20).

39. Upholstery (5) as claimed in one of claims 1, 28 to 38, **characterised in that** at least a flame-retarding agent is added to the foam element (20, 23) and/or the foam element (20, 23) is impregnated with the flame-retarding agent.

40. Upholstery (5) as claimed in claim 39, **characterised in that** the flame-retarding agent contains elements which release nitrogen oxides when the temperature rises and contains melamine, ammonium polyphosphate, etc..

41. Upholstery (5) as claimed in claim 39, **characterised in that** the flame-retarding agent increases in volume when the temperature rises and contains carbon, graphite, for example.

## Revendications

1. Rembourrage (5) pour un siège de passager (1) avec un châssis de support (4), en particulier un siège d'avion, comprenant au moins une couche (7, 26) qui est formée par une face textile (8) en fils (9 à 11) et/ou en fibres formant ces fils (9 à 11), où la face textile (8) est formée au moins par zones par un tricot d'espacement en au moins deux couches (12, 13) espacées l'une de l'autre et des fils de poil s'étendant entre celles-ci, et au côté de la face textile (8) éloigné d'un utilisateur, est disposé au moins par zones au moins un élément fonctionnel (19) réalisé comme élément en mousse (20), **caractérisé en ce que** la face textile (8) est reliée avec une force de précontrainte orientée parallèlement à celle-ci au moins par zones à un cadre de support (6) du châssis de support (4), et **en ce que** l'élément en mousse (20) est disposé avec un espacement de la face textile (8) dans la direction verticale à celle-ci.

2. Rembourrage (5) selon la revendication 1, **caractérisé en ce que** la face textile (8) est tricotée en bonne forme en une pièce dans la forme spatiale tridimensionnelle requise.

3. Rembourrage (5) selon la revendication 1 ou 2, **caractérisé en ce que** la face textile (8) est réalisée à plusieurs couches.

4. Rembourrage (5) selon l'une des revendications précédentes, **caractérisé en ce que** la face textile (8) est formée par zones par un tricot de courroie trapézoïdale.

5. Rembourrage (5) selon l'une des revendications précédentes, **caractérisé en ce que** la face textile (8) présente sur son extension de face une épaisseur différente.

6. Rembourrage (5) selon l'une des revendications précédentes, **caractérisé en ce que** la face textile (8) présente à son pourtour extérieur au moins par zones des bords tricotés (14).

7. Rembourrage selon la revendication 6, **caractérisé en ce que** dans l'extension longitudinale du bord tricoté (14), plusieurs ouvertures espacées les unes des autres sont ménagées.

8. Rembourrage (5) selon la revendication 6 ou 7, **caractérisé en ce que** le bord tricoté (14) est réalisé comme tuyau.

9. rembourrage (5) selon l'une des revendications précédentes, **caractérisé en ce qu'**au moins des fils individuels (9-11) ou fibres de la face textile (8) du tricot d'espacement sont pourvus d'un revêtement.

10. Rembourrage (5) selon l'une des revendications précédentes, **caractérisé en ce qu'**au moins des fils individuels (9-11) ou fibres de la face textile (8) du tricot d'espacement sont pourvus d'une imprégnation.

11. Rembourrage (5) selon la revendication 9 ou 10, **caractérisé en ce que** le revêtement et/ou l'imprégnation est sélectionnée dans le groupe de nanoparticules, vernis, anoblissements de surface.

12. Rembourrage (5) selon l'une des revendications 9 à 11, **caractérisé en ce que** le revêtement et/ou l'imprégnation est réalisée avec un retardateur de combustion.

13. Rembourrage (5) selon l'une des revendications précédentes, **caractérisé en ce que** les fils (9-11) ou fibres sont réalisées en un matériau organique et/ou inorganique et/ou métallique.

14. Rembourrage (5) selon l'une des revendications précédentes, **caractérisé en ce que** les fils (9-11) ou fibres sont d'une élasticité et/ou dureté et/ou dimensions différentes.

15. Rembourrage (5) selon l'une des revendications précédentes, **caractérisé en ce que** les fils (9-11) ou fibres sont sélectionnées dans le groupe des matériaux comprenant le verre, charbon, aramides, métal, acier, céramique, matériaux synthétiques, carbone, coton, chanvre, poils d'animaux.

16. Rembourrage (5) selon l'une des revendications précédentes, **caractérisé en ce que** les fibres sont formées par des fibres d'élastomère en polyuréthane, polyétheramide, polyétherestéramide, composantes de polyoléfine, composantes de polyester ou d'un mélange de ceux-ci.

17. Rembourrage (5) selon la revendication 16, **caractérisé en ce que** les fibres d'élastomère consistent en Elastane®, Lycra® ou d'autres fibres d'élastomère usuels dans le commerce ou d'une fibre à bi-composante.

18. Rembourrage (5) selon l'une des revendications précédentes, **caractérisé en ce que** les fibres ou fils (9-11) sont sélectionnées dans un groupe comprenant des fibres d'aramide et/ou par aramide, comme Kevlar® (poly(p-phénylen-terephthalamide), Nome® (Aramid en m-phénylènediamine et acide isophtalique), Twaron®, Technora, Tei-jinconex, fibres de phénol-formaldéhyd comme Kynol, fibres de polyamide/polyimide comme Kermel, fibres de polybenzimidazol ou mélanges de fibres de ceux-ci.

19. Rembourrage (5) selon la revendication 18, **caractérisé en ce que** les fibres d'aramide et/ou de paraaramide sont mélangées avec des fibres de carbone (Beltron®, Zefstat, Negastat, Resistat), d'acier, de cuivre et/ou de métal.

20. Rembourrage (5) selon la revendication 18 ou 19, **caractérisé en ce que** les fibres d'aramide et/ou de paraaramide sont mélangées avec des fibres de carbone respectivement des fibres métalliques et des fibres élastomères.

21. Rembourrage (5) selon l'une des revendications précédentes, **caractérisé en ce qu'**au moins des fils individuels (9-11) ou fibres de la face textile (8) du tricot d'espacement sont réalisés d'une manière ignifuge.

22. Rembourrage (5) selon l'une des revendications précédentes, **caractérisé en ce qu'**au moins des fils individuels (9-11) ou fibres de la face textile du tricot d'écartement sont réalisés d'une manière électriquement conductrice.

23. Rembourrage (5) selon l'une des revendications précédentes, **caractérisé en ce qu'**il est associé à l'élément de mousse (20), au côté éloigné de l'utilisateur, au moins une autre couche (26).

24. Rembourrage (5) selon la revendication 23, **caractérisé en ce que** l'élément de mousse (20) est relié à l'autre couche (26).

25. Rembourrage (5) selon l'une des revendications précédentes, **caractérisé en ce qu'**au moins par zones, au moins un autre élément de mousse (20) est disposé au côté de la face textile (8) orienté vers l'utilisateur.

26. Rembourrage (5) selon l'une des revendications précédentes, **caractérisé en ce qu'**il est réalisé à l'intérieur de la face textile (8) du tricot d'écartement au moins un espace de réception (24) pour au moins un autre élément fonctionnel (19) réalisé comme coussin d'air (25).

27. Rembourrage (5) selon la revendication 26, **caractérisé en ce que** le coussin d'air (25), quant à son volume et/ou sa dureté, est réalisé d'une manière modifiable.

28. Rembourrage (5) selon la revendication 1, **caractérisé en ce que** l'élément de mousse (20, 23) est formé par un groupe comprenant une mousse de matériau synthétique PUR d'une structure de mousse de préférence à alvéoles ouverts, mousse de matériau synthétique d'une tenue visco-élastique; mousse de matériau synthétique PUR à alvéoles ouverts à base d'ester avec une tenue visco-élastique, mousse de polyimide, mousse de polyéther, mousse au silicone ou mousse élastomère au silicone.

29. Rembourrage (5) selon la revendication 1 ou 28 **caractérisé en ce que** l'élément de mousse (20, 23) présente une densité respectivement un poids spécifique entre 30kg/m3 et 100kg/m3, de préférence entre 40kg/m3 et 70kg/m3.

30. Rembourrage (5) selon l'une des revendications 1, 28 ou 29, **caractérisé en ce que** l'élément de mousse (20, 23) présente une dureté entre 120 N et 450 N, de préférence entre
180 N et 220 N, avec une résistance à l'écrasage de
1 kPa à 15 kPa pour une profondeur d'impression de 40%.

31. Rembourrage (5) selon l'une des revendications 1, 28 à 30, **caractérisé en ce que** l'élément de mousse (20, 23) présente une densité respectivement un poids spécifique entre 5 kg/m3 et 90 kg/m3, de préférence entre 15 kg/m3 et 70 kg/m3.

32. Rembourrage (5) selon l'une des revendications 1, 28 à 31, **caractérisé en ce que** l'élément de mousse (20, 23) présente une dureté entre 800 N et 4000 N et une résistance à l'écrasage entre 30 kPa et 100 kPa pour une profondeur d'impression de 40%.

33. Rembourrage (5) selon l'une des revendications 1, 28 à 32, **caractérisé en ce que** l'élément de mousse (20, 23) présente une dureté entre 150 N et 550 N, de préférence 400 N.

34. Rembourrage (5) selon l'une des revendications 1, 28 à 33, **caractérisé en ce que** la résistance à l'écrasage de l'élément de mousse (20, 23) est entre 1 kPa à 20 kPa, de préférence entre 5 kPa et 10 kPa, pour une profondeur d'impression de 40%.

35. Rembourrage (5) selon l'une des revendications 1, 28 à 34, **caractérisé en ce que** l'élément de mousse (20, 23) présente une densité respectivement un poids spécifique entre 50 kg/m3 et 80 kg/m3, de préférence entre 60 kg/m3 et 70 kg/m3 et est réalisé de préférence par une mousse en matériau synthétique PUR à alvéoles ouverts à base d'ester avec une tenue visco-élastique et présente une résistance à l'écrasement entre 6 kPa et 25 kPa pour une profondeur d'impression de 40%.

36. Rembourrage (5) selon l'une des revendications 1, 28 à 35, **caractérisé en ce qu'**il est placé ou inséré dans l'élément de mousse (20) au moins un dispositif d'appui (21).

37. Rembourrage (5) selon la revendication 36, **caractérisé en ce que** le dispositif d'appui (21) est formé par un noyau de ressort (22), en particulier en NIROSTA.

38. Rembourrage (5) selon l'une des revendications 36 ou 37, **caractérisé en ce que** le dispositif d'appui (21) est formé par un autre élément de mousse (23) en une mousse de matériau synthétique d'une dureté plus élevée relativement à l'élément de mousse (20).

39. Rembourrage (5) selon l'une des revendications 1, 28 à 38, **caractérisé en ce qu'**est ajouté à l'élément de mousse (20, 23) au moins un moyen ignifuge et/ou que l'élément de mousse (20, 23) est imprégné avec le moyen ignifuge.

40. Rembourrage (5) selon la revendication 39, **caractérisé en ce que** le moyen ignifuge, lors d'une augmentation de la température, présente des composants libérants des oxydes d'azote et est formé par exemple par une mélamine, ammoniumpolyphosphate etc.

41. Rembourrage (5) selon la revendication 39, **caractérisé en ce que** le moyen ignifuge, lors d'une augmentation de la température, agrandit le volume et est formé par exemple par du carbone, graphite.
